# EUROPEAN PATENT APPLICATION

(11) **EP 4 496 263 A1**
(43) Date of publication of application: **22.01.2025**
(21) Application number: 23770379.8
(22) Date of filing: 28.02.2023
(51) Int. Cl.: H04L 9/32, G06F 21/64

(54) **INFORMATION PROCESSING DEVICE AND METHOD, AND INFORMATION PROCESSING SYSTEM**

(30) Priority: 18.03.2022 JP 2022044105
(71) Applicant: Sony Group Corporation, Tokyo 108-0075 (JP)
(72) Inventor: KOBAYASHI Tsukasa, Tokyo 108-0075 (JP); IMANISHI Masayuki, Tokyo 108-0075 (JP); MASUDA Yasuto, Tokyo 108-0075 (JP); UJISATO Takanobu, Tokyo 108-0075 (JP)
(74) Representative: D Young & Co LLP
(86) International application number: PCT/JP2023/007212
(87) International publication number: WO 2023/176421

(57) **Abstract**

The present disclosure relates to an information processing device and method, and an information processing system capable of proving authenticity of NFTed content information.

Whether content information has been tampered with is verified by using an electronic signature, and in a case where it is determined that the content information has not been tampered with as a result of the verification, an NFT corresponding to the content information is requested to be issued, or the NFT corresponding to the content information is issued. The present disclosure can be applied to, for example, an information processing device, an electronic device, an information processing method, a program, an information processing system, or the like.

## Description

### TECHNICAL FIELD

The present disclosure relates to an information processing device and method, and an information processing system, and more particularly, to an information processing device and method, and an information processing system capable of proving authenticity of NFTed content information.

### BACKGROUND ART

Conventionally, there is a method of issuing a non-fungible token (NFT) to digital content information and providing adaptive live distribution using the NFT (See, for example, Patent Document 1.).

### CITATION LIST

### PATENT DOCUMENT

Patent Document 1: WO 2021/246498 A

### SUMMARY OF THE INVENTION

### PROBLEMS TO BE SOLVED BY THE INVENTION

However, in the conventional method, it is difficult to prove authenticity of content information to be NFTed.

The present disclosure has been made in view of such a situation, and an object of the present disclosure is to enable proof of authenticity of content information to be NFTed.

### SOLUTIONS TO PROBLEMS

An information processing device according to one aspect of the present technology is an information processing device including: a verification unit that performs verification whether content information has been tampered with using an electronic signature; and a request unit that requests issuance of a non-fungible token (NFT) corresponding to the content information in a case where it is determined as a result of the verification that the content information has not been tampered with.

An information processing method according to one aspect of the present technology is an information processing method including: performing verification whether content information has been tampered with using an electronic signature; and requesting issuance of a non-fungible token (NFT) corresponding to the content information in a case where it is determined as a result of the verification that the content information has not been tampered with.

An information processing device according to another aspect of the present technology is an information processing device including: a verification unit that performs verification whether content information has been tampered with using an electronic signature; and an issuance unit that issues a non-fungible token (NFT) corresponding to the content information in a case where it is determined as a result of the verification that the content information has not been tampered with.

An information processing method according to another aspect of the present technology is an information processing method including: performing verification whether content information has been tampered with using an electronic signature; and issuing a non-fungible token (NFT) corresponding to the content information in a case where it is determined as a result of the verification that the content information has not been tampered with.

An information processing device according to still another aspect of the present technology is an information processing device including: a content information generation unit that generates content information according to an operation of a user; and a content information file generation unit that generates a content information file that stores the content information and a blockchain address corresponding to the user.

An information processing method according to still another aspect of the present technology is an information processing method including: generating content information according to an operation of a user; and generating a content information file that stores the content information and a blockchain address corresponding to the user.

An information processing system according to still another aspect of the present technology is an information processing system including a content information generation device, a verification device, and a non-fungible token (NFT) issuance device, in which the content information generation device includes: a content information generation unit that generates content information according to an operation of a user; a content information file generation unit that generates a content information file that stores the content information and a blockchain address corresponding to the user; and a verification request unit that requests verification of the content information by supplying the content information file to the verification device, the verification device includes: a verification unit that performs verification whether the content information has been tampered with using an electronic signature; and an issuance request unit that requests the NFT issuance device to issue an NFT corresponding to the content information in a case where it is determined as a result of the verification that the content information has not been tampered with, and the NFT issuance device includes an issuance unit that issues the requested NFT corresponding to the content information.

In the information processing device and method according to one aspect of the present technology, whether the content information has been tampered with is verified using the electronic signature, and in a case where it is determined that the content information has not been tampered with as a result of the verification, issuance of a non-fungible token (NFT) corresponding to the content information is requested.

In the information processing device and method according to another aspect of the present technology, whether the content information has been tampered with is verified using the electronic signature, and in a case where it is determined that the content information has not been tampered with as a result of the verification, a non-fungible token (NFT) corresponding to the content information is issued.

In the information processing device and method according to still another aspect of the present technology, the content information is generated according to an operation of the user, and the content information file that stores the content information and a blockchain address corresponding to the user is generated.

In the information processing system according to still another aspect of the present technology, in the content information generation device, the content information is generated according to an operation of the user, and the content information file that stores the content information and a blockchain address corresponding to the user is generated. The content information file is supplied to the verification device, whereby the verification of the content information is requested. In the verification device, whether the content information has been tampered with is verified by using the electronic signature. In a case where it is determined that the content information has not been tampered with as a result of the verification, issuance of an NFT corresponding to the content information is requested to the non-fungible token (NFT) issuance device. In the NFT issuance device, the requested NFT corresponding to the content information is issued.

### BRIEF DESCRIPTION OF DRAWINGS

Fig. 1 is a diagram illustrating a main configuration example of an image processing system.
Fig. 2 is a block diagram illustrating a main configuration example of a user terminal device.
Fig. 3 is a block diagram illustrating a main configuration example of an imaging device.
Fig. 4 is a block diagram illustrating a main configuration example of a verification server.
Fig. 5 is a block diagram illustrating a main configuration example of a smart contract.
Fig. 6 is a flowchart explaining an example of a flow of image processing.
Fig. 7 is a flowchart explaining an example of a flow of registration processing.
Fig. 8 is a diagram illustrating an example of a registration confirmation screen.
Fig. 9 is a flowchart explaining an example of a flow of imaging processing.
Fig. 10 is a diagram illustrating a main configuration example of an image file.
Fig. 11 is a flowchart explaining an example of a flow of verification processing.
Fig. 12 is a diagram illustrating an example of a state of verification using a depth image.
Fig. 13 is a flowchart explaining an example of a flow of NFT issuance processing.
Fig. 14 is a flowchart explaining an example of a flow of the NFT issuance processing.
Fig. 15 is a block diagram illustrating a main configuration example of the user terminal device.
Fig. 16 is a flowchart explaining an example of a flow of the NFT issuance processing.
Fig. 17 is a flowchart explaining an example of a flow of the verification processing.
Fig. 18 is a block diagram illustrating a main configuration example of the verification server.
Fig. 19 is a block diagram illustrating a main configuration example of the smart contract.
Fig. 20 is a flowchart explaining an example of a flow of certificate issuance processing.
Fig. 21 is a flowchart explaining an example of a flow of verification issuance processing.
Fig. 22 is a flowchart explaining an example of a flow of the verification issuance processing, following Fig. 21.
Fig. 23 is a block diagram illustrating a main configuration example of a computer.

### MODE FOR CARRYING OUT THE INVENTION

Hereinafter, a mode for carrying out the present disclosure (hereinafter referred to as an embodiment) will be described. Note that the description will be made in the following order.
1. Documents and the like supporting technical contents and technical terms
2. Proof of authenticity of NFT content information
3. First embodiment (image processing system)
4. Second embodiment (verification after issuance of NFT)
5. Third embodiment (verification by smart contract)
6. Supplementary note

### <1. Documents and the like supporting technical content and technical terms>

The scope disclosed in the present technology includes not only the contents described in the embodiments but also the contents described in the following patent document and the like known at the time of filing, the contents of other documents referred to in the following patent document, and the like.

Patent Document 1: (described above)

That is, the contents described in the above-described patent document, the contents of other documents referred to in the above-described patent document, and the like are also grounds for determining the support requirement.

### <2. Proof of authenticity of NFT content information>

### <NFT conversion of digital content information>

Conventionally, there has been a method of proving ownership of digital content information by issuing a non-fungible token (NFT). For example, Patent Document 1 discloses a method of providing adaptive live distribution using the NFT.

The NFT functions like a cryptographic token, but unlike cryptocurrency or the like, it has a feature that it cannot be exchanged with each other. That is, there is no alternative to the NFT. Therefore, each of the NFTs may have different resources and may have different values. The NFT results from a blockchain associating a record of cryptographic hashes (strings to identify a series of data) to a previous record and forming a chain of identifiable data blocks.

However, in the conventional NFT technology, it is difficult to prove authenticity of content information to be NFTed. For example, by applying the NFT, it is possible to identify the content information as described above, but it is not possible to prove whether or not the content information has been tampered with before issuing the NFT.

### <Verification of authenticity>

Therefore, whether the content information is tampered with is verified using an electronic signature, and in a case where it is determined that the content information is not tampered with as a result of the verification, the NFT corresponding to the content information is requested to be issued.

For example, an information processing device includes: a verification unit that performs verification whether content information has been tampered with using an electronic signature; and a request unit that requests, in a case where it is determined as a result of the verification that the content information has not been tampered with, issuance of an NFT corresponding to the content information.

As described above, by requesting issuance of the NFT for the content information for which the presence or absence of tampering has been verified, authenticity of the content information to be NFTed can be proved.

Furthermore, whether the content information has been tampered with is verified using the electronic signature, and in a case where it is determined that the content information has not been tampered with as a result of the verification, the NFT corresponding to the content information is issued.

For example, an information processing device includes a verification unit that performs verification whether content information has been tampered with using an electronic signature, and an issuance unit that issues an NFT corresponding to the content information in a case where it is determined as a result of the verification that the content information has not been tampered with.

In this manner, by NFTing the content information after verifying whether or not the content information has been tampered with, authenticity of the content information to be NFTed can be proved.

Furthermore, with the conventional NFT technology, it is difficult to prove the authenticity of an issuer of the NFT (applicant of the issuance of the NFT). That is, even if the NFT is applied, it is difficult to confirm whether or not the issuer of the NFT is valid. Therefore, for example, another person who is not a creator of the content information can convert the content information into NFT without permission of the creator.

Therefore, content information is generated according to an operation of a user, and a content information file storing the content information and a blockchain address corresponding to the user is generated.

For example, an information processing device includes a content information generation unit that generates content information in accordance with an operation of a user, and a content information file generation unit that generates a content information file that stores the content information and a blockchain address corresponding to the user.

In this manner, by adding the blockchain address of the user who is a creator of the content information to the NFTed content information, it is possible to verify an issuer of the NFT using the blockchain address. That is, the authenticity of the issuer of the NFT can be proved.

Furthermore, in the conventional NFT technology, even when the NFT is applied, it is difficult to confirm whether or not content information to be NFTed has been counterfeited. Therefore, for example, it is possible to convert into NFT a captured image (image of a non-existent subject) that is counterfeited using a technology such as special effect imaging. For example, by capturing a 2D image by an image contributor, it is possible to generate a captured image that looks as if a 3D subject is captured and convert the captured image into NFT.

Therefore, depth information corresponding to the content information may be generated, and the depth information may be stored in the content information file. For example, the information processing device may further include a depth information generation unit that generates depth information corresponding to the content information, and the content information file generation unit may store the depth information in the content information file.

In this manner, by adding to the content information to be NFTed the depth information corresponding to the content information, it is possible to verify whether or not the content information to be NFTed has been counterfeited using the depth information.

### <3. First embodiment>

### <Image processing system>

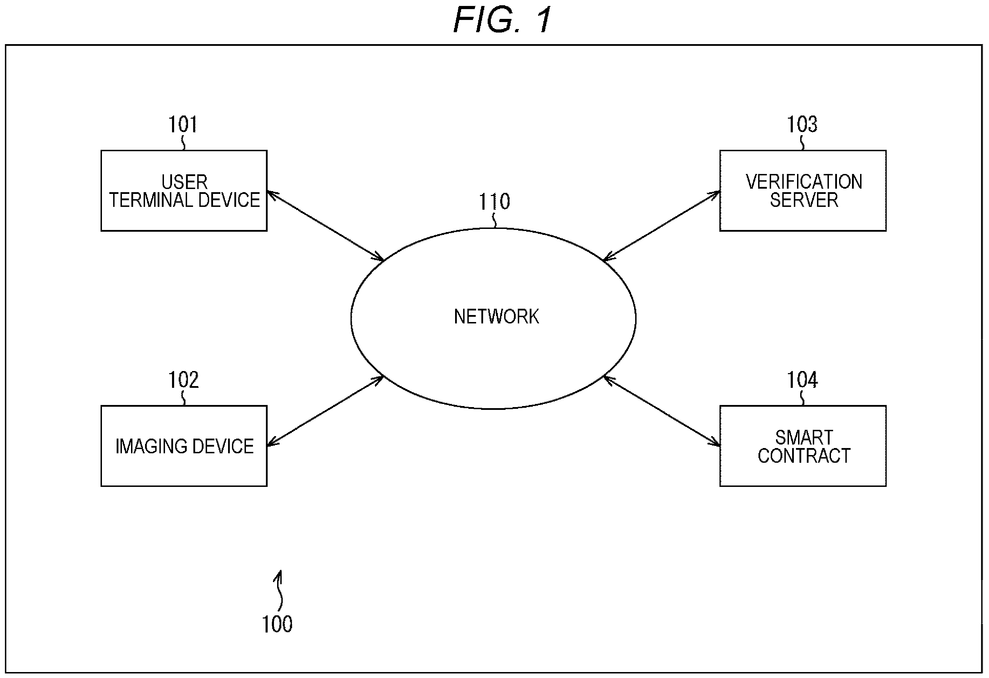

Fig. 1 is a block diagram illustrating an example of a configuration of an image processing system which is an aspect of an information processing system to which the present technology is applied. An image processing system 100 illustrated in Fig. 1 is a system that uses a captured image (image data thereof) as content information and performs processing related to converting the content information into NFT. Note that, in the following description, image data of a captured image may be simply referred to as a captured image.

As illustrated in Fig. 1, the image processing system 100 includes a user terminal device 101, an imaging device 102, a verification server 103, and a smart contract 104. Each of the user terminal device 101 to the smart contract 104 is communicably connected to a network 110. The user terminal device 101 to the smart contract 104 can communicate with other devices via the network 110. Furthermore, the user terminal device 101 and the imaging device 102 can also perform communication by near field communication.

The user terminal device 101 is an information processing device used (or possessed) by a user of the imaging device 102. The user of the user terminal device 101 (and the imaging device 102) is a user of the NFT, and has a corresponding blockchain address. A blockchain is a growing list of records called blocks linked using cryptographic techniques. Each block may include a cryptographic hash of a previous block, a timestamp, transaction data, and the like. The NFT is an unreplaceable data unit using this blockchain. The blockchain address is identification information of a user who uses the technology using such a blockchain. The blockchain address is generated by using a public key (also referred to as a user public key) corresponding to a user-specific private key (also referred to as a user private key). The user terminal device 101 has a function of processing such a blockchain address. Furthermore, the user terminal device 101 has an NFT wallet function, and can process a transaction related to the NFT.

The user terminal device 101 performs processing related to registration of a blockchain address of the user, processing related to verification of an image file that stores a captured image, processing related to issuance of an NFT, or the like. For example, the user terminal device 101 may communicate with the imaging device 102, the verification server 103, or the smart contract 104. For example, the user terminal device 101 may provide and register the blockchain address of the user to the imaging device 102. Furthermore, the user terminal device 101 may request the smart contract 104 to issue the NFT. Furthermore, the user terminal device 101 may request the verification server 103 to verify the information stored in the image file. Furthermore, the user terminal device 101 may request the smart contract 104 to verify the information stored in the image file and issue the NFT.

The imaging device 102 performs processing related to generation of a captured image (still image). For example, the imaging device 102 may communicate with the user terminal device 101 and the verification server 103. For example, the imaging device 102 may register a blockchain address supplied from the user terminal device 101. Furthermore, the imaging device 102 may capture an image of a subject according to an operation of a user (image contributor) and generate image data of the captured image. Furthermore, the imaging device 102 may generate an image file that stores (the image data of) the captured image. Furthermore, the imaging device 102 may add a blockchain address of the user (image contributor) to the captured image and store the image in the image file. Furthermore, the imaging device 102 may request verification for the image file by transmitting the image file to the verification server 103. Furthermore, the imaging device 102 may request generation of an NFT issuance transaction for requesting issuance of an NFT corresponding to the image file by transmitting the image file to the verification server 103. Furthermore, the imaging device 102 may acquire and register a certificate supplied from the verification server 103. Note that the imaging device 102 may communicate with the smart contract 104.

The verification server 103 performs processing related to verification of the image file and processing related to issuance of the NFT. For example, the verification server 103 may communicate with the user terminal device 101, the imaging device 102, or the smart contract 104. For example, the verification server 103 may acquire an image file generated by the imaging device 102. Furthermore, the verification server 103 may verify the information stored in the image file.

Furthermore, the verification server 103 has an NFT wallet function and can process transactions related to the NFT. For example, the verification server 103 may request the smart contract 104 to issue an NFT corresponding to the image file by using its own wallet function. Furthermore, the verification server 103 may generate an NFT issuance transaction for requesting issuance of the NFT corresponding to the image file and supply the NFT issuance transaction to the user terminal device 101 to request issuance of the NFT.

Furthermore, the verification server 103 may communicate with the imaging device 102 and the smart contract 104 to perform processing related to issuance of a certificate.

The smart contract 104 is an information processing device that performs processing related to issuance of an NFT. For example, the smart contract 104 may communicate with the user terminal device 101, the imaging device 102, or the verification server 103. For example, the smart contract 104 may receive a request from the verification server 103 or the user terminal device 101 and issue an NFT in response to the request. Furthermore, the smart contract 104 may issue a certificate and supply the certificate to the verification server 103. Furthermore, the smart contract 104 may receive a request from the user terminal device 101, and verify the information stored in the image file and issue the NFT in response to the request.

In the image processing system 100, the imaging device 102 is a content information generation device that generates content information, the verification server 103 is a verification device that verifies the content information, and the smart contract 104 is an NFT issuance device that issues an NFT. That is, in the image processing system 100, (the image data of) the captured image is the content information, and the image contributor is a creator of the content information. Furthermore, the image file is a content information file that stores the content information.

Note that the user of the user terminal device 101 and the user of the imaging device 102 are the same. Here, the user indicates a user (operator) or an owner of the device. The user may be an individual, or may be a corporation or an organization. Furthermore, the user of the user terminal device 101 and the user of the imaging device 102 may be actually the same, or may be in a relationship that can be regarded as being practically the same due to a contract or the like.

In the image processing system 100, for example, the imaging device 102 captures an image of a subject according to an operation of a user (image contributor) and generates the captured image. Furthermore, the imaging device 102 generates an image file that stores the captured image and the blockchain address corresponding to the user. Furthermore, the imaging device 102 supplies the image file to the verification server 103 to request verification of the captured image. Then, the verification server 103 performs verification whether or not the content information has been tampered with using the electronic signature, and requests the smart contract 104 to issue the NFT corresponding to the captured image in a case where it is determined that the captured image has not been tampered with as a result of the verification. Then, the smart contract 104 issues a requested NFT corresponding to the captured image.

By doing so, the NFT corresponding to the content information whose authenticity is proved by the verification is issued. That is, the image processing system 100 can prove the authenticity of the NFT-converted content information.

Note that, in the example of Fig. 1, the image processing system 100 includes one user terminal device 101, one imaging device 102, one verification server 103, and one smart contract 104, but the number of devices is arbitrary. For example, a plurality of the user terminal devices 101, a plurality of the imaging devices 102, a plurality of the verification servers 103, and a plurality of the smart contracts 104 may be provided, respectively.

### <User terminal device>

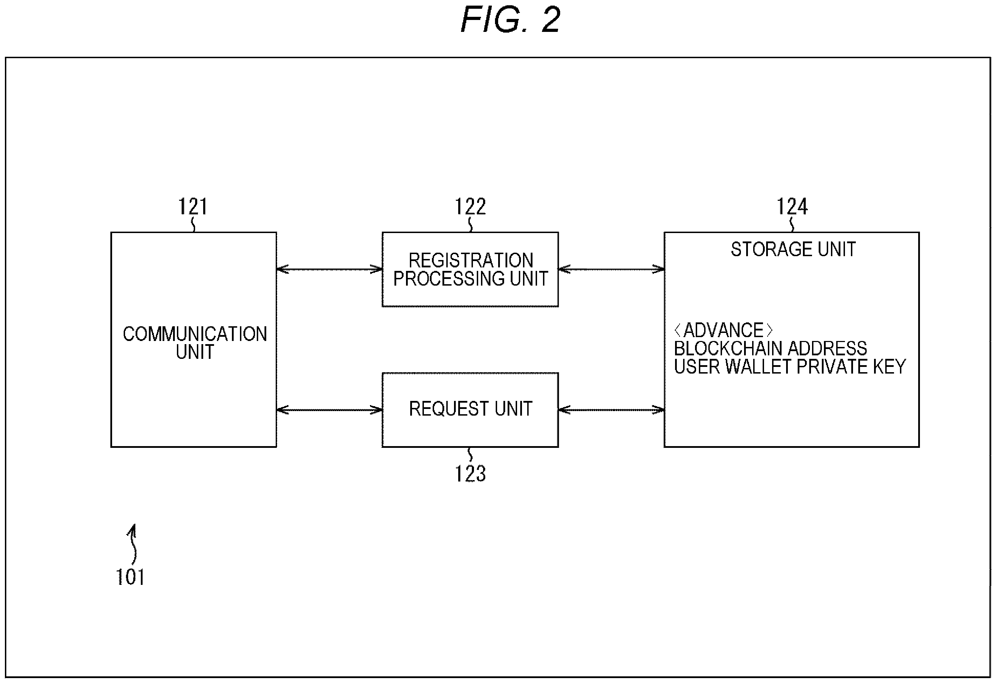

Fig. 2 is a block diagram illustrating a main configuration example of the user terminal device 101 which is an aspect of an information processing device to which the present technology is applied. Note that, in Fig. 2, main processing units, data flows, and the like are illustrated, and those illustrated in Fig. 2 are not necessarily all. That is, the user terminal device 101 may include a device or a processing unit not illustrated as a block in Fig. 2. Furthermore, there may be a flow of data or processing that is not illustrated as an arrow or the like in Fig. 2.

The user terminal device 101 may be implemented with any configuration. For example, the user terminal device 101 may be a dedicated device. Furthermore, the user terminal device 101 may be, for example, a portable information processing terminal device such as a so-called smartphone, a smart watch, a tablet terminal, a notebook personal computer, or the like. Furthermore, the user terminal device 101 may include a single device or a plurality of devices.

As illustrated in Fig. 2, the user terminal device 101 includes a communication unit 121, a registration processing unit 122, a request unit 123, and a storage unit 124.

The communication unit 121 performs processing related to communication with another device. For example, the communication unit 121 may communicate with the imaging device 102, the verification server 103, or the smart contract 104 via the network 110. Furthermore, the communication unit 121 may perform near field communication with the imaging device 102.

The near field communication may be wired communication or wireless communication. For example, the user terminal device 101 and the imaging device 102 may be connected by a communication cable of a predetermined communication standard, and perform wired communication via the communication cable. This communication standard is arbitrary. For example, a universal serial bus (USB) (registered trademark), a high-definition multimedia interface (HDMI) (registered trademark), or others may be used. Furthermore, the user terminal device 101 and the imaging device 102 may perform near field communication of a predetermined communication standard. This communication standard is arbitrary. For example, Bluetooth (registered trademark), ultra wide band (UWB), or Wi-Fi (registered trademark) may be used.

For example, the communication unit 121 may acquire information supplied from another device by the above-described communication and supply the information to the registration processing unit 122 and the request unit 123. Furthermore, the communication unit 121 may acquire information supplied from the registration processing unit 122 or the request unit 123, and supply the information to another device by the communication.

The registration processing unit 122 performs processing related to registration of the blockchain address of the user. That is, the registration processing unit 122 can also be referred to as a registration unit. For example, the registration processing unit 122 may control the communication unit 121 to start a near field communication session with the imaging device 102. Furthermore, the registration processing unit 122 may acquire the blockchain address of the user from the storage unit 124. Furthermore, the registration processing unit 122 may supply the blockchain address to the imaging device 102 via the communication unit 121 to request registration of the blockchain address. Note that the blockchain address may be registered by near field communication with the imaging device 102 or by communication via the network 110.

The request unit 123 performs processing related to a request for NFT issuance. The request unit 123 has an NFT wallet function. For example, the request unit 123 may acquire NFT issuance transaction supplied from the verification server 103 via the communication unit 121. The NFT issuance transaction includes information necessary for issuing the NFT. Furthermore, the request unit 123 may acquire a user wallet private key from the storage unit 124. Furthermore, the request unit 123 may request the smart contract 104 to issue the NFT by executing the NFT issuance transaction using the user wallet private key. With this processing, information necessary for issuing the NFT is supplied to the smart contract 104 via the communication unit 121.

The storage unit 124 includes an arbitrary storage medium such as a hard disk or a semiconductor memory, and performs processing related to storage and reading of arbitrary information. For example, the storage unit 124 may store the blockchain address or the user wallet private key corresponding to the user of the user terminal device 101 in advance. Note that "in advance" indicates at least before the information is used. That is, the storage unit 124 may store these pieces of information, for example, at the time of shipment from the factory or after shipment from the factory. Furthermore, the storage unit 124 may read the blockchain address in response to a request from the registration processing unit 122 and supply the blockchain address to the registration processing unit 122. Furthermore, the storage unit 124 may read the user wallet private key in response to a request from the request unit 123 and supply the user wallet private key to the request unit 123.

In the user terminal device 101 having such a configuration, for example, the communication unit 121 performs communication (near field communication) with the imaging device 102, and the registration processing unit 122 uses the communication with the imaging device 102 to supply the blockchain address of the user to the imaging device 102 via the communication unit 121.

By doing so, the user terminal device 101 can easily register the blockchain address in the imaging device 102.

Furthermore, the request unit 123 executes the NFT issuance transaction. As a result, the user terminal device 101 can request the smart contract 104 to issue the NFT.

Furthermore, the request unit 123 acquires and executes the NFT issuance transaction supplied from the verification server 103 via the communication unit 121. By doing so, it is possible to request issuance of the NFT corresponding to the content information for which authenticity has been verified in the verification server 103.

### <Imaging device>

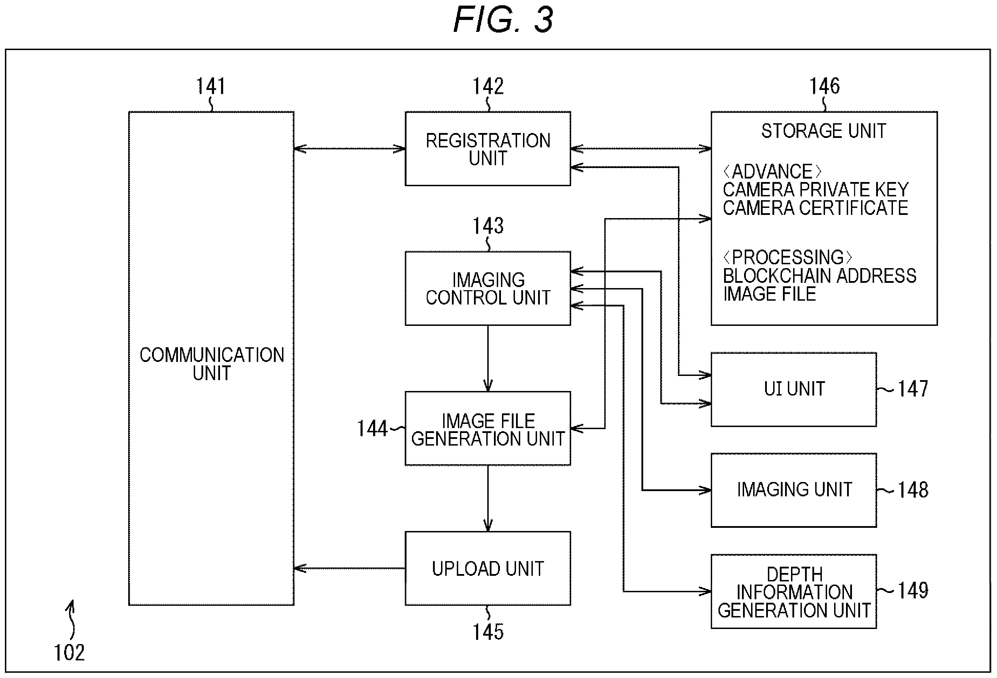

Fig. 3 is a block diagram illustrating a main configuration example of the imaging device 102 which is an aspect of an information processing device to which the present technology is applied. Note that, in Fig. 3, principal ones among processing units, data flows and the like are illustrated, and not all of them are illustrated in Fig. 3. That is, the imaging device 102 may include a device or a processing unit not illustrated as a block in Fig. 3. Furthermore, there may be a flow of data or processing that is not illustrated as an arrow or the like in Fig. 3.

The imaging device 102 may be implemented by any configuration. For example, the imaging device 102 may be a dedicated device that captures a still image, such as a so-called camera. Furthermore, the imaging device 102 may be a device capable of capturing both a still image and a moving image, such as a so-called video camera. Furthermore, the imaging device 102 may be an information processing device having an imaging function, such as a so-called smartphone, a smart watch, a tablet terminal, a notebook personal computer, or the like. Furthermore, the imaging device 102 may include a single device or a plurality of devices.

As illustrated in Fig. 3, the imaging device 102 includes a communication unit 141, a registration unit 142, an imaging control unit 143, an image file generation unit 144, an upload unit 145, a storage unit 146, a UI unit 147, an imaging unit 148, and a depth information generation unit 149.

The communication unit 141 performs processing related to communication with another device. For example, the communication unit 141 may communicate with the user terminal device 101, the verification server 103, or the smart contract 104 via the network 110. Furthermore, the communication unit 141 may perform near field communication with the user terminal device 101.

For example, the communication unit 141 may acquire information supplied from another device by such communication and supply the information to the registration unit 142. Furthermore, the communication unit 141 may acquire the information supplied from the registration unit 142 or the upload unit 145, and supply the information to another device by the communication.

The registration unit 142 performs processing related to registration of the blockchain address of the user. For example, the registration unit 142 may control the communication unit 141 to start a near field communication session with the user terminal device 101. Furthermore, the registration unit 142 may acquire the blockchain address transmitted from the user terminal device 101 by the near field communication via the communication unit 141. Furthermore, the registration unit 142 may supply the blockchain address to the storage unit 146 and store the blockchain address. That is, the blockchain address of the user is registered by this processing.

Furthermore, the registration unit 142 may cause the UI unit 147 (an output device included therein) to present information regarding the registration of the blockchain address. Furthermore, the registration unit 142 may cause the UI unit 147 (an input device included therein) to receive a user's instruction (operation) regarding the registration of the blockchain address. Then, the registration unit 142 may acquire information indicating the user's instruction (operation) received by the UI unit 147. Furthermore, the registration unit 142 may perform processing related to registration of a blockchain address on the basis of the information.

Note that the blockchain address may be registered manually by the user. In this case, the registration unit 142 may control the UI unit 147 to receive the input of the blockchain address by the user. Then, the registration unit 142 may acquire the input blockchain address from the UI unit 147. Then, the registration unit 142 may supply the acquired blockchain address to the storage unit 146 to store (register) the blockchain address.

The imaging control unit 143 performs processing related to control of the imaging unit 148 and the depth information generation unit 149. That is, the imaging control unit 143 can also be referred to as a content information generation unit, a captured image generation unit, a depth information generation unit, or the like. For example, the imaging control unit 143 may supply information regarding imaging to the UI unit 147 to present the information. Furthermore, the imaging control unit 143 may cause the UI unit 147 (an input device included therein) to receive a user's instruction (operation) regarding imaging. Then, the imaging control unit 143 may acquire information indicating the user's instruction (operation) received by the UI unit 147.

Furthermore, the imaging control unit 143 may control the imaging unit 148 according to the instruction (that is, the operation of the user) to capture an image of the subject and generate the captured image. Then, the imaging control unit 143 may acquire the captured image. Then, the imaging control unit 143 may supply the captured image to the image file generation unit 144.

Furthermore, the imaging control unit 143 may control the depth information generation unit 149 according to the instruction (that is, the operation of the user) to generate the depth information corresponding to the captured image generated in the imaging unit 148. Then, the imaging control unit 143 may acquire the depth information. Then, the imaging control unit 143 may supply the depth information to the image file generation unit 144.

The image file generation unit 144 performs processing related to generation of an image file that stores the captured image. That is, the image file generation unit 144 can also be referred to as a content information file generation unit. For example, the image file generation unit 144 may acquire the captured image supplied from the imaging control unit 143. Furthermore, the image file generation unit 144 may acquire the depth information supplied from the imaging control unit 143. Furthermore, the image file generation unit 144 may acquire the blockchain address from the storage unit 146. Furthermore, the image file generation unit 144 may acquire a camera private key from the storage unit 146. The camera private key is a private key unique to the imaging device 102. Furthermore, the image file generation unit 144 may acquire a camera certificate from the storage unit 146. The camera certificate is a certificate for a camera private key. The camera certificate may include a camera public key. The camera public key is a public key corresponding to the camera private key.

For example, the image file generation unit 144 may generate an image file and store the captured image acquired from the imaging control unit 143 in the image file. Furthermore, the image file generation unit 144 may store the blockchain address acquired from the storage unit 146 in the image file. That is, the image file generation unit 144 may assign a blockchain address as metadata to the captured image. Furthermore, the image file generation unit 144 may store the depth information acquired from the imaging control unit 143 in the image file. That is, the image file generation unit 144 may add depth information as metadata to the captured image.

Furthermore, the image file generation unit 144 may generate a camera electronic signature using the captured image, the blockchain address, the depth information, and the camera private key. The camera electronic signature is an electronic signature used for verifying the captured image (and metadata thereof) stored in an image file. The camera electronic signature may be obtained by hashing the captured image or metadata (for example, the blockchain address, depth information, or the like) and encrypting the hashed captured image or metadata with a camera private key. Then, the image file generation unit 144 may store the generated camera electronic signature in the image file. That is, the image file generation unit 144 may add a camera electronic signature to the captured image. Furthermore, the image file generation unit 144 may store the camera certificate in the image file. That is, the image file generation unit 144 may give the camera certificate to the captured image.

The image file generation unit 144 may supply the generated image file to the upload unit 145. Furthermore, the image file generation unit 144 may supply the generated image file to the storage unit 146 to store.

The upload unit 145 performs processing related to the upload of the image file. For example, the upload unit 145 may acquire the image file supplied from the image file generation unit 144. Furthermore, the upload unit 145 may supply (upload) the image file to the verification server 103 via the communication unit 141. With this upload, the upload unit 145 requests verification (and subsequent issuance of NFTs) of the image file (captured image or the like). That is, the upload unit 145 can also be referred to as a request unit.

The storage unit 146 includes an arbitrary storage medium such as a hard disk or a semiconductor memory, and performs processing related to storage and reading of arbitrary information. For example, the storage unit 146 may store the camera private key and the camera certificate in advance. Note that "in advance" indicates at least before the information is used. That is, the storage unit 146 may store these pieces of information, for example, at the time of shipment from the factory or after shipment from the factory. Note that the camera private key is a private key unique to the imaging device 102. The camera certificate is a certificate for a camera private key. The camera certificate may include a camera public key. The camera public key is a public key corresponding to the camera private key.

Furthermore, the storage unit 146 may acquire and store (register) the blockchain address supplied from the registration unit 142.

Furthermore, the storage unit 146 may supply the camera private key to the image file generation unit 144 in response to a request from the image file generation unit 144. Furthermore, the storage unit 146 may supply the camera certificate to the image file generation unit 144 in response to a request from the image file generation unit 144. Furthermore, the storage unit 146 may supply the blockchain address to the image file generation unit 144 in response to a request from the image file generation unit 144.

Furthermore, the storage unit 146 may acquire and store the image file supplied from the image file generation unit 144.

The UI unit 147 performs processing related to a user interface. For example, the UI unit 147 includes an output device that outputs an image and audio. The output device may be any device, and may include, for example, a display that displays an image, character information, or the like. The display may be any display. For example, the display may be a liquid crystal display (LCD), an organic electro luminescence display (OELD), a projector, or a device other than these. Furthermore, the output device may include, for example, a speaker that outputs audio. The number of output devices included in the UI unit 147 is arbitrary. Furthermore, the UI unit 147 includes an input device that receives a user operation. The input device may be any device, and may include, for example, a touch panel, a switch, a keyboard, a mouse, an image sensor, a microphone, or the like. The number of input devices included in the UI unit 147 is arbitrary.

The UI unit 147 is driven under the control of the registration unit 142 or the imaging control unit 143. For example, the UI unit 147 may present information to the user via an output device. That is, the UI unit 147 can also be referred to as an output unit, a presentation unit, or the like. Furthermore, the UI unit 147 may receive a user's instruction (operation) via the input device. Furthermore, the UI unit 147 may supply information indicating the received user's instruction (operation) to a request source (the registration unit 142 or the imaging control unit 143). That is, the UI unit 147 can also be referred to as an input unit. For example, the UI unit 147 may receive a user's instruction (operation) regarding registration of a blockchain address via the input device, and supply information indicating the instruction (operation) to the registration unit 142. Furthermore, the UI unit 147 may receive a user's instruction (operation) regarding imaging via the input device and supply information indicating the instruction (operation) to the imaging control unit 143. Furthermore, the UI unit 147 may receive an instruction (operation) of the user regarding generation of the depth information via the input device and supply information indicating the instruction (operation) to the imaging control unit 143.

The imaging unit 148 includes an optical system such as a lens and a diaphragm and an image sensor, and performs processing related to capturing an image of a subject using the optical system and the image sensor. For example, the imaging unit 148 may be driven under the control of the imaging control unit 143. This control is performed according to a user's instruction (user's operation). Furthermore, the imaging unit 148 may be manually operated by the user. That is, the imaging unit 148 is driven according to the operation of the user (image contributor). For example, the imaging unit 148 may drive the optical system or the image sensor to capture an image of a subject and generate the captured image. That is, the imaging unit 148 can also be referred to as a content information generation unit, a captured image generation unit, or the like. Furthermore, the imaging unit 148 may supply the generated captured image to the imaging control unit 143.

The depth information generation unit 149 includes a sensor (also referred to as a depth sensor) that detects a distance (depth value) to the subject, and performs processing related to generation of the depth information using the depth sensor. For example, the depth information generation unit 149 may be driven under the control of the imaging control unit 143. This control may be performed according to a user's instruction (user's operation). For example, the depth information generation unit 149 may drive the depth sensor to detect the depth value to the subject and generate the depth information. Furthermore, the depth information generation unit 149 may supply the generated depth information to the imaging control unit 143.

The depth information may be any information as long as it includes a depth value. For example, similarly to the captured image, the depth information may have a pixel array structure including a plurality of pixels. In this case, each pixel value of the depth information indicates the distance (depth value) to the subject. Furthermore, the depth information may include a depth value of a predetermined representative position of the subject in the captured image.

Note that the depth information generation unit 149 may generate the depth information corresponding to the captured image generated by the imaging unit 148. For example, the depth information generation unit 149 may detect the depth value to the subject imaged by the imaging unit 148 at substantially the same timing as the imaging to generate the depth information. Here, "substantially the same timing" indicates a timing that is approximate to the extent that it is difficult to switch the subject between imaging and detection of the depth value, or the same timing. That is, the "depth information corresponding to the captured image" indicates information that can specify a position in a depth direction for each portion of the subject in the captured image. In other words, the "depth information corresponding to the captured image" indicates information that can identify a three-dimensional shape of the subject in the captured image. That is, the depth information generation unit 149 can also be referred to as a content information generation unit.

In the imaging device 102 having such a configuration, for example, the imaging unit 148 generates a captured image according to an operation of a user, and the image file generation unit 144 generates an image file that stores the captured image and a blockchain address corresponding to the user. By doing so, the verification server 103 can verify whether or not the image contributor and the issuer of the NFT (the person who requests the NFT issuance) are the same on the basis of the blockchain address. Therefore, the verification server 103 can verify the authenticity of the image contributor (the creator of the content information) of the captured image to be NFTed.

Furthermore, the image file generation unit 144 stores the electronic signature corresponding to the captured image and the blockchain address in the image file. By doing so, the verification server 103 can verify whether or not the captured image to be NFTed is tampered with. Therefore, the verification server 103 can verify the authenticity of the captured image to be NFTed.

Furthermore, the image file generation unit 144 stores the camera certificate in the image file. By doing so, the verification server 103 can verify whether or not the captured image to be NFTed is tampered with using the information of the image file. Therefore, the verification server 103 can more easily verify the authenticity of the captured image to be NFTed.

Furthermore, the depth information generation unit 149 generates depth information corresponding to the captured image, and the image file generation unit 144 stores the depth information in the image file. By doing so, the verification server 103 can verify whether or not the captured image is valid using the depth information. Therefore, the verification server 103 can verify the authenticity of the captured image to be NFTed.

Furthermore, the upload unit 145 transmits the image file to the verification server 103 to request verification of the captured image and the like and issuance of the NFT corresponding to the captured image. By doing so, the verification server 103 can verify the captured image, and the smart contract 104 can issue the NFT corresponding to the captured image verified by the verification server 103. Therefore, the verification server 103 can verify the authenticity of the captured image to be NFTed.

### <Verification server>

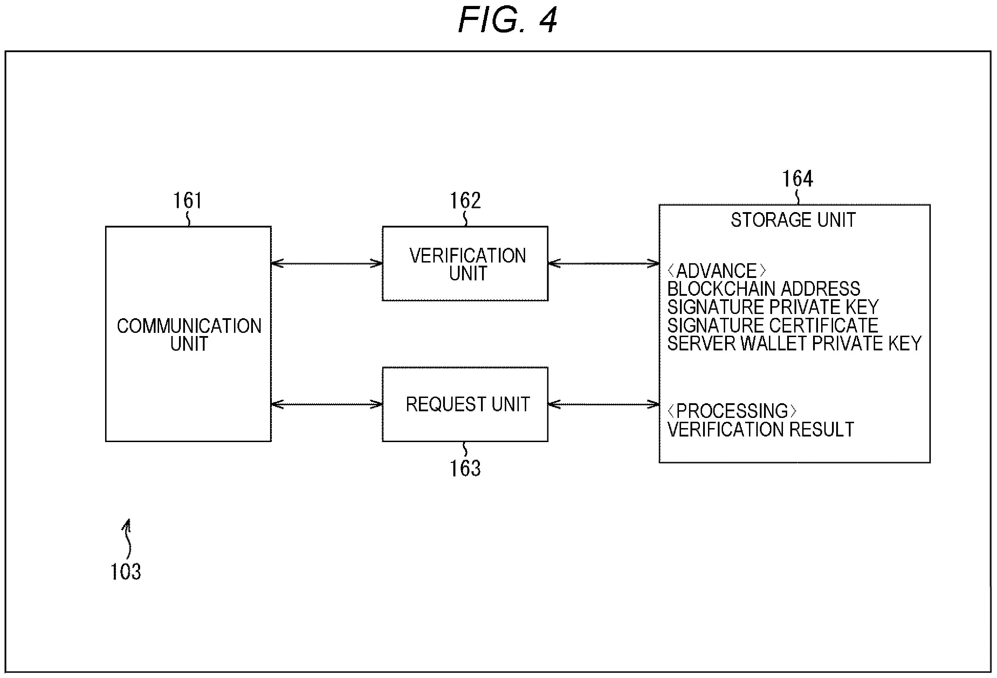

Fig. 4 is a block diagram illustrating a main configuration example of the verification server 103 which is an aspect of the information processing device to which the present technology is applied. Note that, in Fig. 4, main processing units, data flows, and the like are illustrated, and those illustrated in Fig. 4 are not necessarily all. That is, the verification server 103 may include a device or a processing unit not illustrated as a block in Fig. 4. Furthermore, there may be a flow of data or processing that is not illustrated as an arrow or the like in Fig. 4.

The verification server 103 may be implemented with any configuration. For example, the verification server 103 may be configured as hardware or software. For example, the verification server 103 may be configured by a single computer or a plurality of computers. Furthermore, the verification server 103 may be configured as a virtual computer. Furthermore, the verification server 103 may be configured as a so-called cloud server.

As illustrated in Fig. 4, the verification server 103 includes a communication unit 161, a verification unit 162, a request unit 163, and a storage unit 164.

The communication unit 161 performs processing related to communication with another device. For example, the communication unit 161 may communicate with the user terminal device 101, the imaging device 102, or the smart contract 104 via the network 110. For example, the communication unit 161 may acquire information supplied from another device through the communication and supply the information to the verification unit 162 and the request unit 163. Furthermore, the communication unit 161 may acquire information supplied from the verification unit 162 or the request unit 163, and supply the information to another device by the communication.

The verification unit 162 performs processing related to verification of a captured image or the like. For example, the verification unit 162 may acquire the image file transmitted from the imaging device 102 via the communication unit 161. That is, the verification unit 162 may acquire a request for verification of the image file.

Furthermore, the verification unit 162 may verify the acquired image file in response to the request. For example, the verification unit 162 may verify whether the camera certificate included in the image file is valid. This verification method is arbitrary. For example, the verification unit 162 may verify whether the camera certificate is valid by inquiring of a certificate authority in which information of the camera private key and the camera public key is registered.

Furthermore, in a case where the camera certificate is determined to be valid, the verification unit 162 may verify whether or not the captured image and the metadata have been tampered with, using the camera certificate and the camera electronic signature stored in the image file. For example, the verification unit 162 may perform this verification by comparing the hashed image and metadata with the camera electronic signature decrypted with the camera public key.

Furthermore, in a case where it is determined that the captured image and the metadata have not been tampered with, the verification unit 162 may verify whether or not the captured image has been counterfeited by using the depth information stored in the image file.

Furthermore, the verification unit 162 may supply information indicating a result of the verification as described above to the storage unit 164 and store the information.

The request unit 163 performs processing related to a request for issuance of an NFT. The request unit 163 has an NFT wallet function. For example, the request unit 163 may acquire information indicating the verification result of the verification unit 162 from the storage unit 164 and perform processing on the basis of the verification result. Furthermore, the request unit 163 may acquire a signature private key from the storage unit 164. The signature private key is a private key unique to the verification server 103. Furthermore, the request unit 163 may acquire a server wallet private key from the storage unit 164.

For example, the request unit 163 may generate an NFT issuance transaction to be executed by itself. The NFT issuance transaction is a transaction requesting issuance of an NFT, and includes information necessary for issuing the NFT. For example, the request unit 163 may generate the NFT issuance transaction by using a metadata URL and the blockchain address. The metadata URL is an address indicating a storage destination of the image file to be NFTed.

Then, the request unit 163 may execute the generated NFT issuance transaction using the server wallet private key. With this processing, information necessary for issuing the NFT is supplied to the smart contract 104 via the communication unit 121, and issuance of the NFT is requested.

Note that the request unit 163 may verify whether or not the blockchain address stored in the NFTed image file matches the blockchain address of the user of the imaging device 102. Then, the request unit 163 may generate the above-described NFT issuance transaction in a case where the image contributor is confirmed to be valid. Here, the blockchain address stored in the image file indicates the creator of the content information (the image contributor of the captured image). That is, by this verification, the request unit 163 can confirm whether the image contributor is valid. Note that the blockchain address of the user of the imaging device 102 may be provided from the imaging device 102 to the verification server 103 together with the image file, or may be provided from the imaging device 102 to the verification server 103 in advance.

Furthermore, the request unit 163 may generate an NFT issuance transaction to be executed by another device. For example, the request unit 163 may generate an NFT issuance transaction to be executed by the user terminal device 101. Then, the request unit 163 may transmit the generated NFT issuance transaction to the user terminal device 101 via the communication unit 161.

In this case, the request unit 163 may generate the NFT issuance transaction by using, for example, the above-described metadata URL and blockchain address, and an electronic signature (also referred to as a cloud electronic signature). The cloud electronic signature is an electronic signature for verifying tampering of the metadata URL and the blockchain address described above. For example, the request unit 163 may generate this cloud electronic signature by using the above-described metadata URL, blockchain address, and signature private key. For example, the request unit 163 may generate the cloud electronic signature by hashing the image file corresponding to the metadata URL described above and the blockchain address and encrypting them with the signature private key.

The storage unit 164 includes an arbitrary storage medium such as a hard disk or a semiconductor memory, and performs processing related to storage and reading of arbitrary information. For example, the storage unit 164 may store a signature private key, a signature certificate, and a server wallet private key in advance. The signature certificate is a certificate for a signature private key. The signature certificate may include a public key (also referred to as a signature public key) corresponding to the signature private key. The signature certificate may be registered in the smart contract 104 in advance. Note that "in advance" indicates at least before the information is used. That is, the storage unit 164 may store these pieces of information, for example, at the time of shipment from the factory or after shipment from the factory. Furthermore, the storage unit 164 may store information indicating the verification result supplied from the verification unit 162.

Furthermore, the storage unit 164 may read the signature private key, the signature certificate, or the server wallet private key in response to a request from the request unit 163, and supply the read one to the request unit 163. Furthermore, the storage unit 164 may read information indicating the verification result in response to a request from the request unit 163 and supply the information to the request unit 163.

In the verification server 103 having such a configuration, for example, the verification unit 162 performs verification whether or not the captured image has been tampered with using the camera electronic signature, and in a case where it is determined that the captured image has not been tampered with as a result of the verification, the request unit 163 requests the issuance of the NFT corresponding to the captured image. By doing so, the verification server 103 can prove that the captured image to be NFTed has not been tampered with. That is, the verification server 103 can verify the authenticity of the NFTed content information.

Furthermore, the verification unit 162 verifies whether the metadata of the captured image has been tampered with, using the camera electronic signature. By doing so, the verification server 103 can prove that the metadata of the captured image to be NFTed has not been tampered with. That is, the verification server 103 can verify the authenticity of the metadata of the NFTed content information.

Furthermore, the verification unit 162 verifies whether the captured image is valid using the depth information corresponding to the captured image. In this way, the verification server 103 can verify whether or not the captured image to be NFTed has been counterfeited. That is, the verification server 103 can verify the authenticity of the NFTed content information.

Furthermore, the request unit 163 generates the NFT issuance transaction for requesting issuance of an NFT. By doing so, the verification server 103 can realize the request for issuing the NFT to the smart contract 104.

Furthermore, the request unit 163 executes the NFT issuance transaction. By doing so, the verification server 103 can request the smart contract 104 to issue the NFT.

Furthermore, the request unit 163 supplies the NFT issuance transaction to the user terminal device 101 that requests issuance of the NFT. With this configuration, the verification server 103 can cause the user terminal device 101 to request issuance of the NFT.

### <Smart contract>

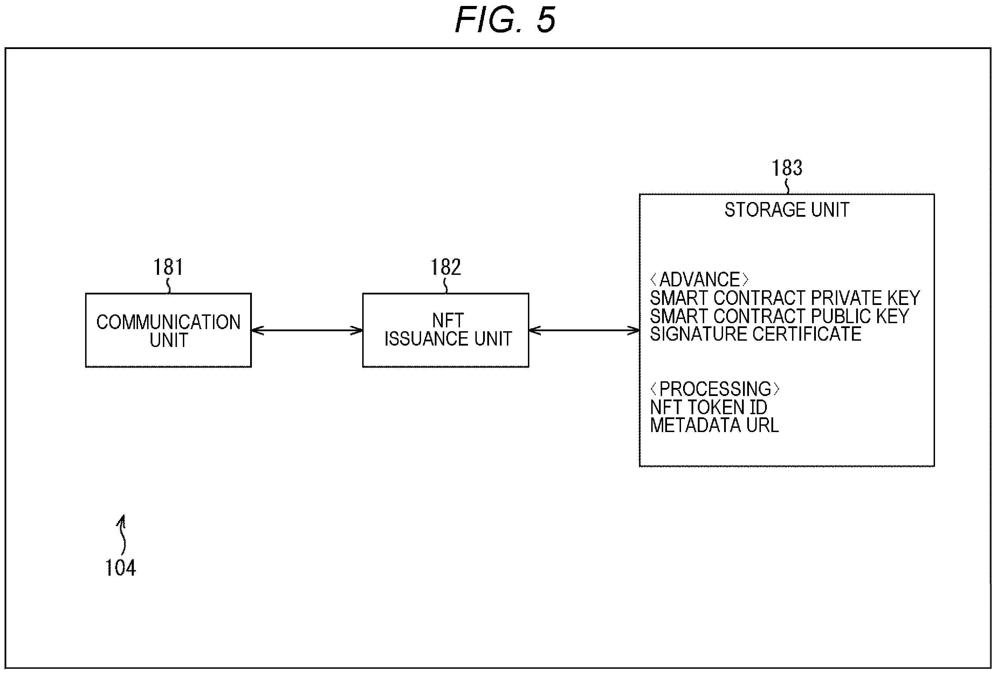

Fig. 5 is a block diagram illustrating a main configuration example of the smart contract 104 which is an aspect of an information processing device to which the present technology is applied. Note that, in Fig. 5, main processing units, data flows, and the like are illustrated, and those illustrated in Fig. 5 are not necessarily all. That is, the smart contract 104 may include a device or a processing unit not illustrated as a block in Fig. 5. Furthermore, there may be a flow of data or processing that is not illustrated as an arrow or the like in Fig. 5.

The smart contract 104 may be implemented by any configuration. For example, the smart contract 104 may be configured as hardware or software. For example, the smart contract 104 may include a single computer or a plurality of computers. Furthermore, the smart contract 104 may be configured as a virtual computer. Furthermore, the smart contract 104 may be configured as a so-called cloud server.

As illustrated in Fig. 5, the smart contract 104 includes a communication unit 181, an NFT issuance unit 182, and a storage unit 183.

The communication unit 181 performs processing related to communication with another device. For example, the communication unit 181 may communicate with the user terminal device 101, the imaging device 102, or the verification server 103 via the network 110. For example, the communication unit 181 may acquire information supplied from another device through the communication and supply the information to the NFT issuance unit 182. Furthermore, the communication unit 181 may acquire the information supplied from the NFT issuance unit 182 and supply the information to another device through the communication.

The NFT issuance unit 182 performs processing related to issuance of an NFT. That is, the NFT issuance unit 182 can also be referred to as an issuance unit. For example, the NFT issuance unit 182 may acquire a request for NFT issuance from the verification server 103 via the communication unit 181. That is, the NFT issuance unit 182 may acquire information (for example, a metadata URL, a blockchain address, and the like) necessary for issuing the NFT from the verification server 103 that has executed the NFT issuance transaction.

Furthermore, the NFT issuance unit 182 may verify whether or not an executor of the NFT issuance transaction is the verification server 103. The executor of the NFT issuance transaction is the requester (issuer) of the NFT issuance. That is, the NFT issuance unit 182 may verify whether or not the issuer is the verification server 103 that has verified the captured image or the like. The verification server 103 can verify whether or not the image contributor is valid. That is, by performing this verification, the NFT issuance unit 182 can confirm whether or not the issuer is valid (whether or not the issuer is a valid image contributor (creator of the content information)). Accordingly, the smart contract 104 can prove the authenticity of the issuer of the NFT.

Furthermore, the NFT issuance unit 182 may acquire a request for NFT issuance from the user terminal device 101 via the communication unit 181. That is, the NFT issuance unit 182 may acquire information (for example, a metadata URL, a blockchain address, a cloud electronic signature, or the like.) necessary for issuing the NFT from the user terminal device 101 that has executed the NFT issuance transaction.

Furthermore, the NFT issuance unit 182 may acquire the signature certificate from the storage unit 183. Then, the NFT issuance unit 182 may verify whether or not the metadata URL, the blockchain address, or the like has been tampered with using the cloud electronic signature and the signature certificate. For example, the NFT issuance unit 182 may compare a result obtained by hashing the image file corresponding to the metadata URL and the blockchain address with a result obtained by decrypting the cloud electronic signature with the signature public key (the public key corresponding to the signature private key) included in the signature certificate. By performing this verification, the NFT issuance unit 182 can confirm the presence or absence of tampering of the image file and the blockchain address. Therefore, the smart contract 104 can prove authenticity of the NFTed content information.

Furthermore, the NFT issuance unit 182 may verify whether or not the executor of the NFT issuance transaction ((the user of) the user terminal device 101) corresponds to the blockchain address included in the NFT issuance transaction. The NFT issuance transaction includes the blockchain address of the image contributor (creator of the content information). Therefore, by performing this verification, the NFT issuance unit 182 can confirm whether or not the issuer is valid (whether or not the issuer is a valid image contributor (creator of the content information)). Accordingly, the smart contract 104 can prove the authenticity of the issuer of the NFT.

Furthermore, the NFT issuance unit 182 may issue an NFT token ID using the information acquired as described above. That is, the NFT issuance unit 182 may issue the NFT corresponding to the content information verified by the verification server 103, which is requested from the verification server 103 or the user terminal device 101.

Furthermore, the NFT issuance unit 182 may supply the metadata URL indicating a storage location of the captured image to be NFTed to the storage unit 183 and store the metadata URL. Furthermore, the NFT issuance unit 182 may supply the issued NFT token ID to the storage unit 183 and store the NFT token ID.

The storage unit 183 includes an arbitrary storage medium such as a hard disk or a semiconductor memory, and performs processing related to storage and reading of arbitrary information. For example, the storage unit 183 may store in advance a private key (also referred to as a smart contract private key) unique to the smart contract 104, a public key (also referred to as a smart contract public key) corresponding to the smart contract private key, and a signature certificate. The signature certificate is a certificate corresponding to a signature private key used by the verification server 103, and includes a signature public key corresponding to the signature private key. The signature certificate may be supplied in advance from the verification server 103. For example, the verification server 103 may perform a transaction for registering the signature certificate in advance, and the smart contract 104 may perform the registration after confirming whether the executor of the transaction is the account of the verification server 103. Note that "in advance" indicates at least before the information is used. That is, the storage unit 183 may store these pieces of information, for example, at the time of shipment from the factory or after shipment from the factory.

Furthermore, the storage unit 183 may read the signature certificate in response to a request from the NFT issuance unit 182 and supply the signature certificate to the NFT issuance unit 182.

Furthermore, the storage unit 183 may store the metadata URL supplied from the NFT issuance unit 182. Furthermore, the storage unit 183 may store the NFT token ID supplied from the NFT issuance unit 182.

With such a configuration, the smart contract 104 can issue the NFT corresponding to the image file whose authenticity of the captured image, the metadata, or the like has been verified. As a result, authenticity of content information to be NFTed can be proved.

### <Flow of image processing>

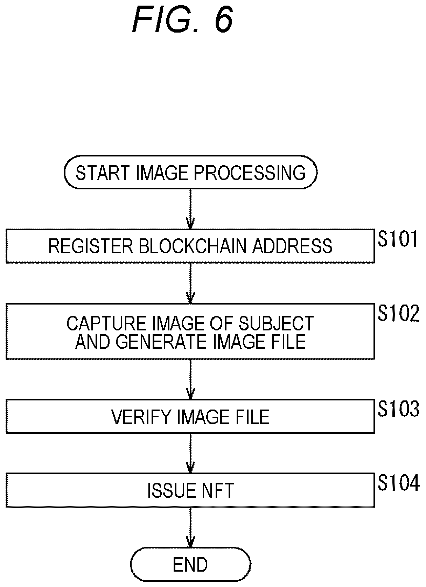

Next, an example of a flow of image processing executed by the image processing system 100 as described above will be described with reference to a flowchart of Fig. 6.

When the image processing is started, the user terminal device 101 and the imaging device 102 execute registration processing of registering a blockchain address in step S101.

In step S102, the imaging device 102 executes imaging processing of capturing an image of a subject and generating an image file.

In step S103, the imaging device 102 and the verification server 103 execute verification processing of verifying the authenticity of the information stored in the image file.

In step S104, the verification server 103 and the smart contract 104, or the user terminal device 101, the verification server 103, and the smart contract 104 execute NFT issuance processing of issuing the NFT corresponding to the verified image file.

When the processing of step S104 ends, the image processing ends.

### <Flow of registration processing>

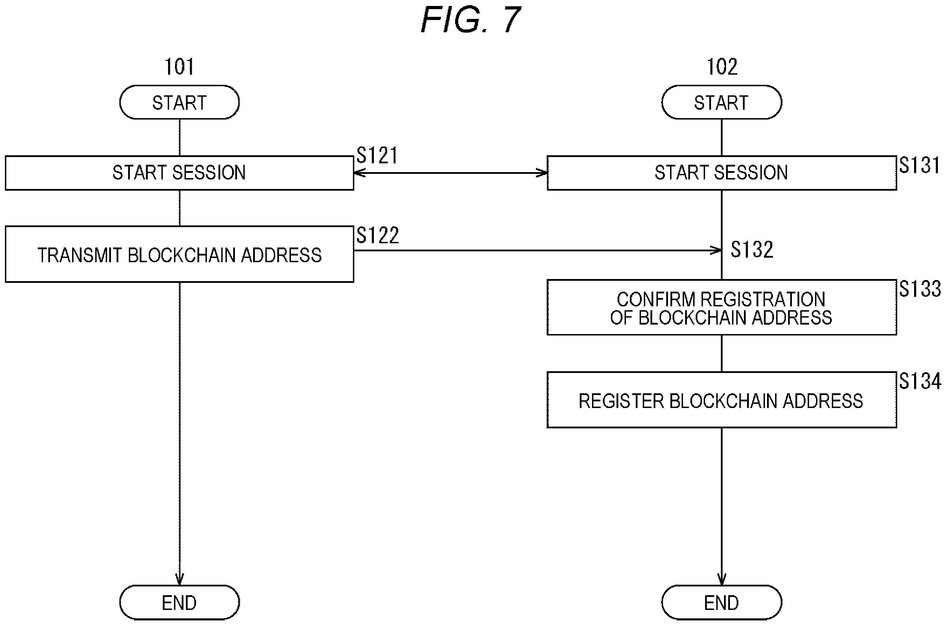

Next, an example of a flow of the registration processing executed in step S101 of Fig. 6 will be described with reference to a flowchart of Fig. 7.

When the registration processing is started, in step S121, the registration processing unit 122 of the user terminal device 101 controls the communication unit 121 to start a near field communication session with the imaging device 102. The communication unit 121 performs the near field communication with the imaging device 102 according to the control, and starts the session. On the other hand, in step S131, the registration unit 142 of the imaging device 102 controls the communication unit 141 to start a near field communication session with the user terminal device 101. The communication unit 141 performs near field communication with the user terminal device 101 according to the control and starts the session.

When the session is started, the registration processing unit 122 of the user terminal device 101 reads and acquires the blockchain address of the user from the storage unit 124 in step S122. Furthermore, the registration processing unit 122 supplies the blockchain address to the imaging device 102 via the communication unit 121.

In step S132, the registration unit 142 of the imaging device 102 acquires the blockchain address transmitted from the user terminal device 101 by the near field communication via the communication unit 141.

In step S133, the registration unit 142 controls the UI unit 147 to display a registration confirmation screen on a display or the like to confirm to the user whether or not to register the blockchain address.

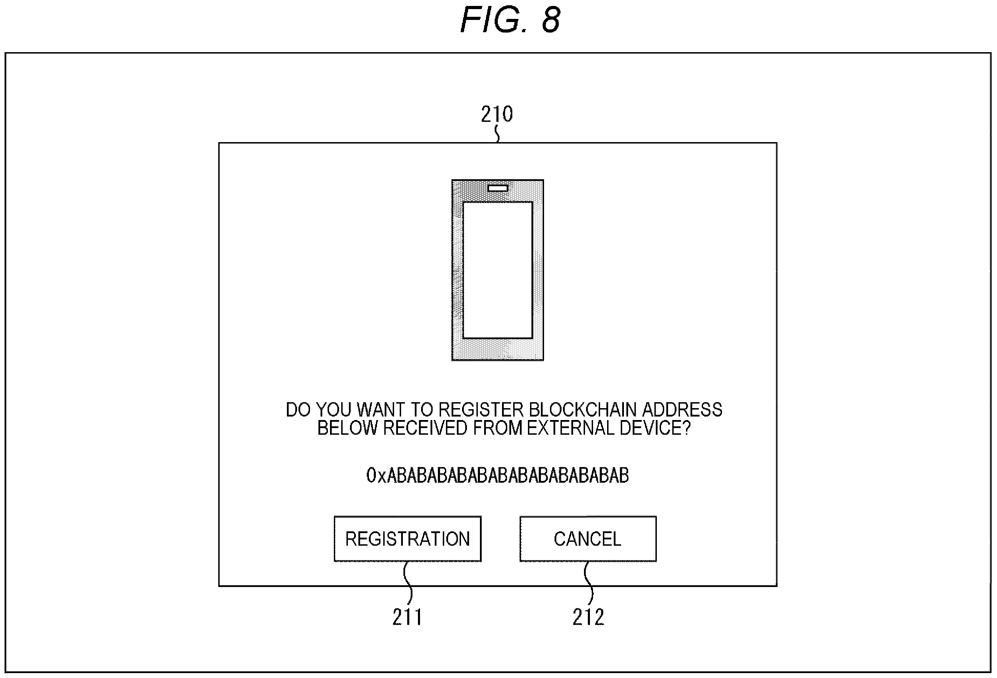

Fig. 8 is a diagram illustrating an example of a registration confirmation screen. In a case of the example of Fig. 8, a message "DO YOU WANT TO REGISTER BLOCKCHAIN ADDRESS BELOW RECEIVED FROM EXTERNAL DEVICE?", its blockchain address (In the case of the example of Fig. 8, "0xABABABABABABABABABABABAB"), a registration button 211, and a cancel button 212 are displayed on a registration confirmation screen 210. The registration button 211 is a graphical user interface (GUI) to which an instruction to register the displayed blockchain address (registration execution instruction) is input by the user's operation. The cancel button 212 is a GUI to which an instruction to cancel the registration of the blockchain address (registration cancel instruction) is input by the user's operation. The user who sees the above message operates the input device to press the registration button 211 or the cancel button 212. In a case where the registration button 211 is pressed, the registration processing is continued, and the following processing is executed. Furthermore, in a case where the cancel button 212 is pressed, the registration processing ends.

In a case where the registration button 211 is pressed and registration of the blockchain address is permitted, the registration unit 142 registers the blockchain address acquired from the user terminal device 101 (the blockchain address displayed on the registration confirmation screen 210) in step S134.

When the processing of step S134 ends, the registration processing ends.

### <Flow of imaging processing>

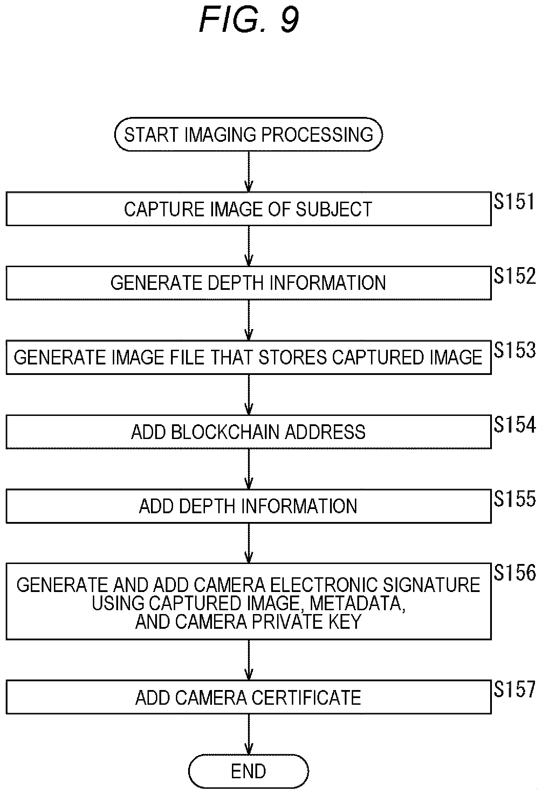

Next, an example of a flow of the imaging processing executed in step S102 in Fig. 6 will be described with reference to a flowchart in Fig. 9.

When the imaging processing is started, in step S151, the imaging control unit 143 of the imaging device 102 controls the imaging unit 148 on the basis of the user's instruction received by the UI unit 147 to capture an image of the subject and generate the captured image. The imaging unit 148 captures an image of the subject and generates the captured image according to the control. The imaging unit 148 supplies the generated captured image to the imaging control unit 143.

In step S152, the imaging control unit 143 controls the depth information generation unit 149 to generate the depth information corresponding to the captured image. In accordance with the control, the depth information generation unit 149 detects the depth value up to the subject of the captured image and generates the depth information. The depth information generation unit 149 supplies the generated depth information to the imaging control unit 143. Note that this processing is performed at substantially the same timing as the processing in step S151.

In step S153, the image file generation unit 144 acquires the captured image from the imaging control unit 143, and generates an image file that stores the captured image.

In step S154, the image file generation unit 144 acquires the blockchain address from the storage unit 146 and stores the blockchain address in the image file. That is, the image file generation unit 144 adds the blockchain address to the captured image as metadata.

In step S155, the image file generation unit 144 acquires the depth information from the imaging control unit 143 and stores the depth information in the image file. That is, the image file generation unit 144 adds the depth information to the captured image as metadata.

In step S156, the image file generation unit 144 acquires the camera private key from the storage unit 146. The image file generation unit 144 generates a camera electronic signature using the captured image, the metadata thereof, and the camera private key. For example, the image file generation unit 144 generates the camera electronic signature by hashing the captured image and the metadata and encrypting them with the camera private key. The image file generation unit 144 stores the generated camera electronic signature in the image file. That is, the image file generation unit 144 adds a camera electronic signature to the captured image.

In step S157, the image file generation unit 144 acquires the camera certificate from the storage unit 146 and stores the camera certificate in the image file. That is, the image file generation unit 144 adds a camera electronic signature to the captured image.

When the processing of step S157 ends, the imaging processing ends.

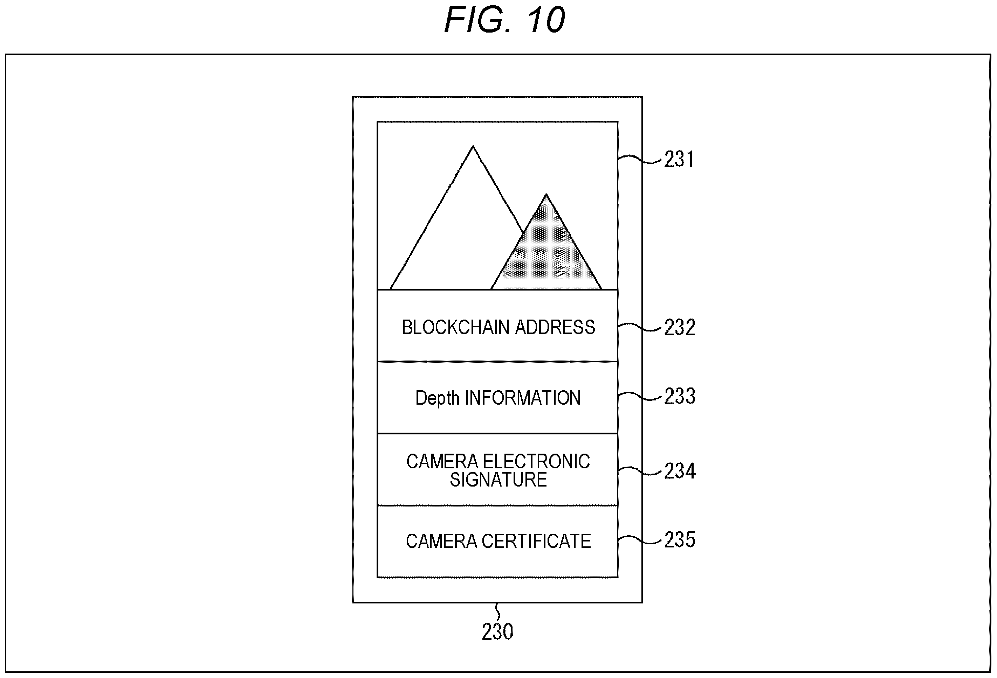

Fig. 10 is a diagram illustrating a main configuration example of the image file generated in the imaging device 102. The image file generation unit 144 generates an image file 230 having a configuration as illustrated in Fig. 10. As illustrated in Fig. 10, a captured image 231, a blockchain address 232, depth information 233, a camera electronic signature 234, and a camera certificate 235 are stored in the image file 230. Note that the blockchain address 232 and the depth information 233 may not be added. That is, the blockchain address 232 may not be stored in the image file 230. Similarly, the depth information 233 may not be stored in the image file 230. Of course, information other than these may be stored in the image file 230.

### <Flow of verification processing>

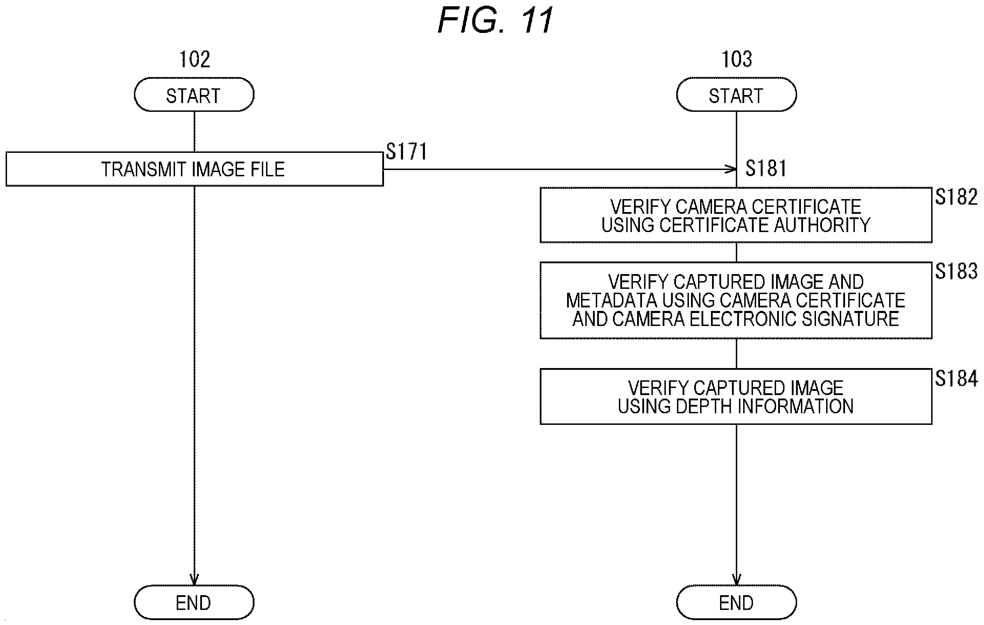

Next, an example of a flow of the verification processing executed in step S103 of Fig. 6 will be described with reference to a flowchart of Fig. 11.

When the verification processing is started, in step S171, the upload unit 145 of the imaging device 102 transmits (uploads) the image file generated by the image file generation unit 144 to the verification server 103 via the communication unit 141. In step S181, the verification unit 162 of the verification server 103 acquires the image file via the communication unit 161.

In step S182, the verification unit 162 verifies whether or not the camera certificate stored in the image file is valid by inquiring of a certificate authority in which information of the camera private key and the camera public key is registered. In a case where it is determined that the camera certificate is invalid, the verification processing ends.

In a case where it is determined that the camera certificate is valid, in step S183, the verification unit 162 verifies whether or not the captured image and the metadata stored in the image file have been tampered with, using the camera certificate and the camera electronic signature stored in the image file. In a case where it is determined that the captured image and the metadata have been tampered with, the verification processing ends.

In a case where it is determined that the captured image and the metadata have not been tampered with, the verification unit 162 verifies whether or not the captured image has been counterfeited using the depth information in step S184.

When the processing in step S184 is completed, the verification unit 162 supplies information indicating the verification result to the storage unit 164 and stores the information. Then, the verification processing ends.

Note that either the processing in step S182 or the processing in step S183 may be executed first.

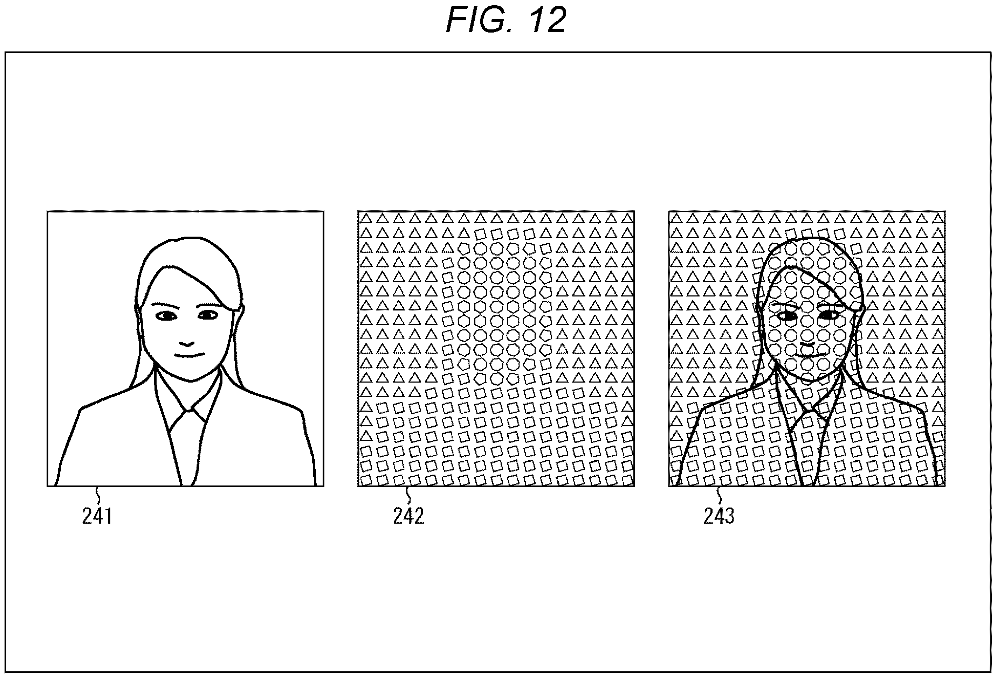

Fig. 12 is a diagram illustrating an example of a state of the processing of step S184, that is, verification of the captured image using the depth information. For example, it is assumed that the captured image 241 is generated in the imaging unit 148 and the depth information 242 is generated in the depth information generation unit 149. The depth information 242 is information corresponding to the captured image 241. In the depth information 242, each polygon indicates a depth value. Each polygon indicates that the subject in the region is farther from the imaging device 102 (depth information generation unit 149) as the number of angles is smaller. In other words, each polygon indicates that the subject in the region is closer to the imaging device 102 (depth information generation unit 149) as the number of angles is larger. Although a resolution of the depth information 242 is arbitrary, it is desirable that the resolution be higher (for example, the same resolution as that of the captured image 241) if the data amount is not considered.

Note that an optical axis of an optical image from which the captured image 241 is obtained and an optical axis of an optical image from which the depth information 242 is obtained may be the same. The optical axis refers to a principal ray passing through a center of a light flux passing through the entire system in the optical system. For example, the captured image 241 and the depth information 242 may be obtained from one optical image. Furthermore, one optical image may be divided into two optical images (the same optical images) by a beam splitter (half mirror) or the like using a prism or the like, the captured image 241 may be acquired from one optical image, and the depth information 242 may be acquired from the other optical image. That is, for example, the imaging unit 148 and the depth information generation unit 149 may share a part or all of one optical system.

As described above, since the optical axis of the optical image for obtaining the captured image 241 and the optical axis of the optical image for obtaining the depth information 242 are the same, it is possible to obtain the depth information 242 from the same angle as in the case of the captured image 241 of the subject within a range (view angle) of the scene included in the captured image 241 with respect to the subject. Note that a range of the depth information 242 acquired from the optical image is arbitrary. For example, the range of the depth information 242 may be the same as the angle of view of the captured image 241, or may be a range including a part or all of the angle of view. For example, the depth information 242 may include depth values from the same angle as in the case of the captured image 241 obtained at a plurality of positions within the angle of view of the captured image 241.

Since the captured image 241 and the depth information 242 correspond to each other, in a case where the captured image 241 is obtained by capturing an image of a three-dimensional object existing by a valid method, as illustrated in a superimposed image 243, a state of the unevenness of the object indicated by the depth information 242 corresponds to a three-dimensional shape in the real space of the object estimated from the captured image 241. However, in a case where the captured image 241 is counterfeited, there is a possibility that the two images do not coincide with each other. For example, in a case where the captured image 241 is a captured image (2D image) of a three-dimensional subject, the subject is expressed as a plane in the depth information 242. However, since a subject having a three-dimensional shape is estimated from the captured image 241, it does not match the depth information. In this manner, the verification unit 162 can verify whether or not the captured image has been counterfeited by using the depth information.

### <Flow of NFT issuance processing>

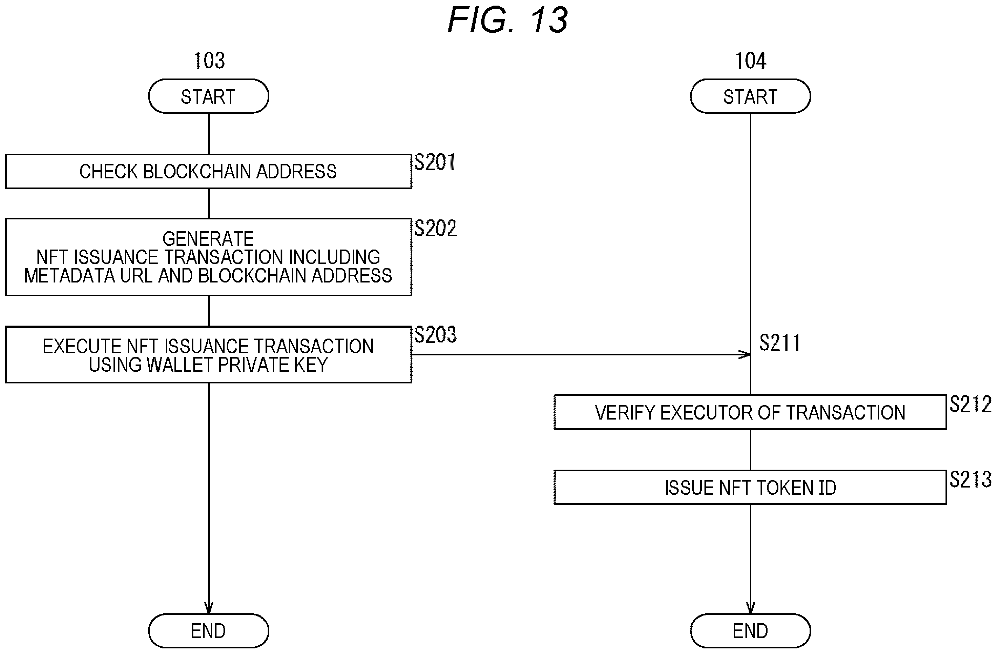

Next, an example of a flow of the NFT issuing processing executed in step S104 of Fig. 6 will be described with reference to a flowchart of Fig. 13. As described above, the NFT issuance request may be performed by the verification server 103 or may be performed by a device (for example, the user terminal device 101) other than the verification server 103. In Fig. 13, an example of a case where the verification server 103 makes a request will be described.

When the NFT issuance processing is started, the request unit 163 of the verification server 103 checks the blockchain address in step S201. That is, in a case where it is determined in step S184 of Fig. 11 that the captured image is valid, the request unit 163 verifies whether or not the blockchain address stored in the image file to be NFTed matches the blockchain address of the user of the imaging device 102. Here, the blockchain address stored in the image file indicates the creator of the content information (the image contributor of the captured image). That is, by this verification, the request unit 163 can confirm whether the image contributor is valid. Note that the blockchain address of the user of the imaging device 102 may be provided from the imaging device 102 to the verification server 103 together with the image file, or may be provided from the imaging device 102 to the verification server 103 in advance.

In a case where it is determined that the blockchain addresses do not match and the NFT issuer is different from the image contributor, the NFT issuance processing ends. Furthermore, in a case where the blockchain addresses match and it is confirmed that the image contributor is valid, the processing proceeds to step S202.

In step S202, the request unit 163 generates an NFT issuance transaction including the metadata URL (that is, the image file) indicating the storage destination of the image file and the blockchain address indicating the issuer of the NFT. The NFT issuance transaction is a transaction requesting issuance of an NFT, and includes information necessary for issuing the NFT corresponding to the image file.

When the NFT issuance transaction is generated, in step S203, the request unit 163 acquires the server wallet private key from the storage unit 164. The request unit 163 executes an NFT issuance transaction using the server wallet private key. With this processing, information necessary for issuing the NFT is supplied to the smart contract 104 via the communication unit 161. That is, issuance of the NFT is requested to the smart contract 104.

In step S211, the NFT issuance unit 182 of the smart contract 104 acquires the request. That is, the NFT issuance unit 182 acquires information (for example, a metadata URL, a blockchain address, and the like) necessary for issuing the NFT from the verification server 103.

In step S212, the NFT issuance unit 182 verifies the executor of the transaction. That is, the NFT issuance unit 182 verifies whether or not the executor of the NFT issuance transaction is the verification server 103. The executor of the NFT issuance transaction is the requester (issuer) of the NFT issuance. That is, the NFT issuance unit 182 verifies whether or not the issuer is the verification server 103 that has verified the captured image and the like. The verification server 103 can verify whether or not the image contributor is valid. That is, by performing this verification, the NFT issuance unit 182 can confirm whether or not the issuer is valid (whether or not the issuer is a valid image contributor (creator of the content information)). Accordingly, the smart contract 104 can prove the authenticity of the issuer of the NFT.

In a case where these blockchain addresses do not match and the issuer is determined to be invalid, the NFT issuance processing ends. Furthermore, in a case where these blockchain addresses match and the issuer is determined to be valid, the processing proceeds to step S213.

In step S213, the NFT issuance unit 182 issues the NFT token ID corresponding to the content information verified by the verification server 103, which is requested from the verification server 103, by using the acquired information.

When the processing of step S213 ends, the NFT issuance processing ends.

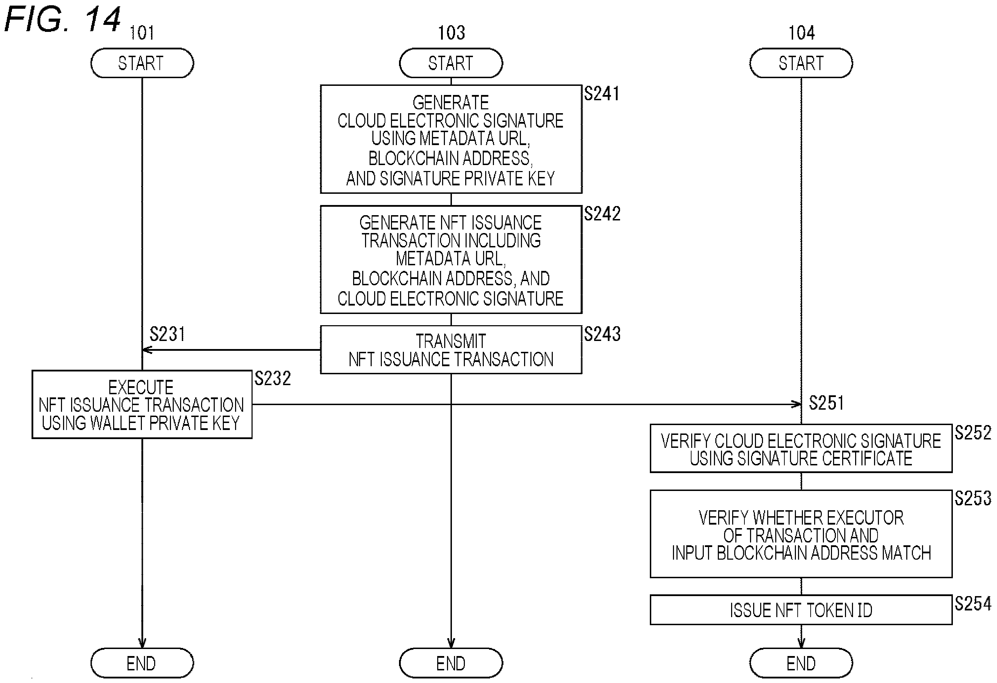

Next, an example of a flow of an NFT issuance processing in a case where the user terminal device 101 makes an NFT issuance request will be described with reference to a flowchart of Fig. 14.

When the NFT issuance processing is started, the request unit 163 of the verification server 103 generates the cloud electronic signature using the metadata URL, the blockchain address, and the signature private key in step S241. For example, the request unit 163 may generate the cloud electronic signature by hashing the image file corresponding to the metadata URL described above and the blockchain address and encrypting them with the signature private key.

In step S242, the request unit 163 generates an NFT issuance transaction including the metadata URL, the blockchain address, and the cloud electronic signature. The NFT issuance transaction is a transaction requesting issuance of an NFT, and includes information necessary for issuing the NFT.

In step S243, the request unit 163 transmits the generated NFT issuance transaction to the user terminal device 101 via the communication unit 161.

In step S231, the request unit 123 of the user terminal device 101 acquires the NFT issuance transaction via the communication unit 121.

In step S232, the request unit 123 acquires the user wallet private key from the storage unit 124. The request unit 123 executes the NFT issuance transaction using the user wallet private key. With this processing, information necessary for issuing the NFT is supplied to the smart contract 104 via the communication unit 121. That is, issuance of the NFT is requested to the smart contract 104.

In step S251, the NFT issuance unit 182 of the smart contract 104 acquires the request. That is, the NFT issuance unit 182 acquires information (for example, a metadata URL, a blockchain address, a cloud electronic signature, or the like.) necessary for issuing the NFT from the user terminal device 101.

In step S252, the NFT issuance unit 182 acquires the signature certificate from the storage unit 183. The NFT issuance unit 182 verifies whether or not the captured image, the blockchain address, or the like has been tampered with, using the signature certificate and the cloud electronic signature. For example, the NFT issuance unit 182 may compare a result obtained by hashing the image file corresponding to the metadata URL and the blockchain address with a result obtained by decrypting the cloud electronic signature with the signature public key (the public key corresponding to the signature private key) included in the signature certificate. By performing this verification, the NFT issuance unit 182 can confirm the presence or absence of tampering of the image file and the blockchain address. Therefore, the smart contract 104 can prove authenticity of the NFTed content information.

In a case where it is determined that the captured image, the blockchain address, or the like have been tampered with, the NFT issuance processing ends. Furthermore, in a case where it is determined that the captured image, the blockchain address, and the like have not been tampered with, the processing proceeds to step S253.

In step S253, the NFT issuance unit 182 verifies whether or not the executor of the NFT issuance transaction ((the user of) the user terminal device 101) corresponds to the blockchain address included in the NFT issuance transaction. The NFT issuance transaction includes the blockchain address of the image contributor (content information creator). Therefore, by performing this verification, the NFT issuance unit 182 can confirm whether or not the issuer is valid (whether or not the issuer is a valid image contributor (creator of the content information)). Accordingly, the smart contract 104 can prove the authenticity of the issuer of the NFT.

In a case where it is determined that the blockchain address does not correspond to the transaction executor and the NFT issuer is not valid, the NFT issuance processing ends. Furthermore, in a case where the blockchain address corresponds to the transaction executor and the NFT issuer is determined to be valid, the processing proceeds to step S254.

In step S254, the NFT issuance unit 182 issues the NFT token ID corresponding to the content information verified by the verification server 103, which is requested from the user terminal device 101, by using the acquired information.

When the processing of step S254 ends, the NFT issuance processing ends.

By executing each processing as described above, the smart contract 104 can issue the NFT corresponding to the image file whose authenticity of the captured image, the metadata, or the like has been verified. As a result, authenticity of content information to be NFTed can be proved.

### <4. Second embodiment>

### <Verification after issuance of NFT>

In the first embodiment, it has been described that the NFT is issued after the image file is verified, but the image file may be verified after the NFT is issued. For example, verification may be performed on (information stored in) an image file NFTed by a conventional system.

### <User terminal device>

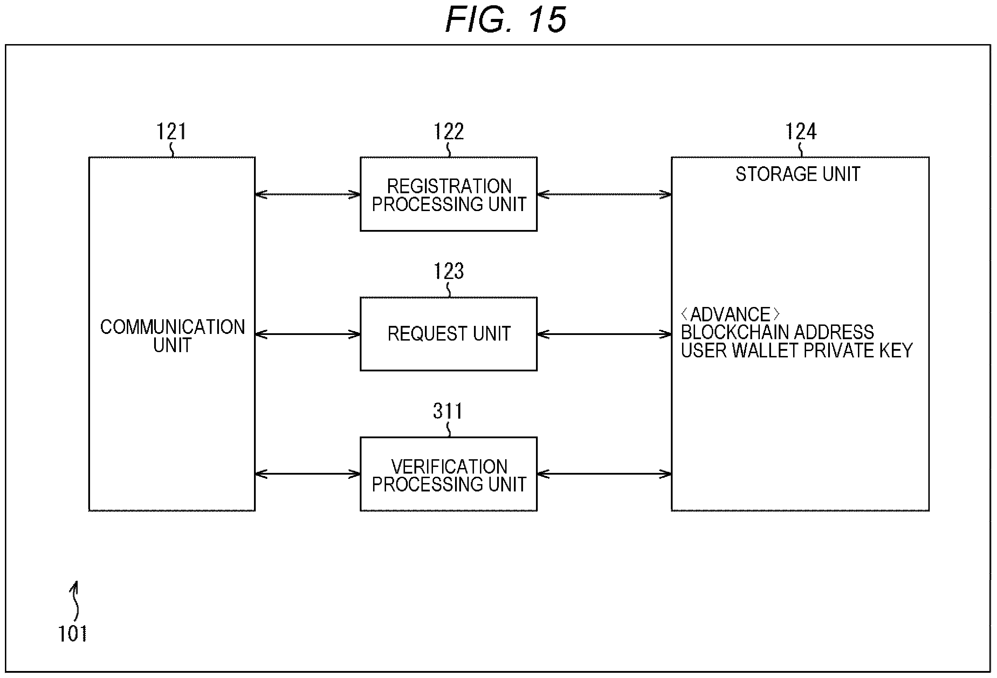

Fig. 15 is a block diagram illustrating a main configuration example of a user terminal device 101 in that case. In this case, the user terminal device 101 includes a verification processing unit 311 in addition to the configuration illustrated in Fig. 2.

The verification processing unit 311 executes processing related to a verification request for the NFTed captured image or the like. For example, the verification processing unit 311 may request the verification server 103 to verify the NFTed captured image or the like via a communication unit 121. At that time, the verification processing unit 311 may make an inquiry using a smart contract address and the NFT token ID. The smart contract address is identification information of the smart contract 104. That is, in this case, the verification processing unit 311 specifies the content information to be verified by using the NFT token ID, and specifies the smart contract 104 that has issued the NFT for the content information by using the smart contract address.

Furthermore, the verification processing unit 311 may acquire information indicating a verification result supplied from the verification server 103 as a response to the request via the communication unit 121. Furthermore, the verification processing unit 311 may supply information indicating the verification result to a storage unit 124 and store the information.

Furthermore, in this case, a request unit 123 may generate an NFT issuance transaction including a metadata URL indicating a storage destination of the image file. The NFT issuance transaction is a transaction requesting issuance of an NFT, and includes information necessary for issuing the NFT. Furthermore, the request unit 123 may request the smart contract 104 to issue the NFT by executing the generated NFT issuance transaction using its own wallet function. With this processing, information necessary for issuing the NFT is supplied to the smart contract 104 via the communication unit 121.

### <Flow of NFT issuance processing>

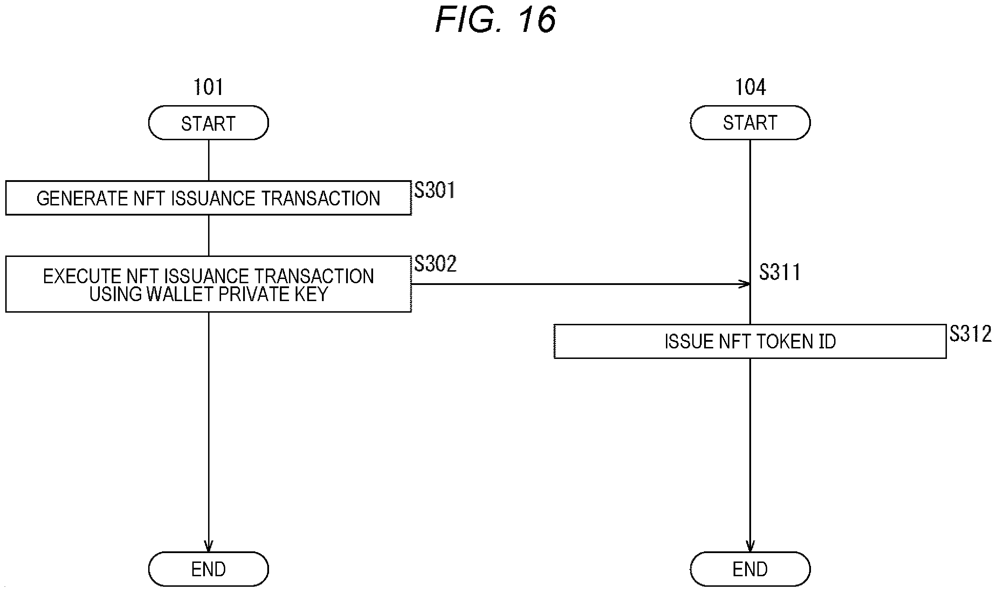

An example of a flow of the NFT issuance processing in this case will be described with reference to a flowchart of Fig. 16. When the NFT issuance processing is started, in step S301, the request unit 123 of the user terminal device 101 generates an NFT issuance transaction including the metadata URL indicating a storage destination of the image file.

In step S302, the request unit 123 acquires the user wallet private key from the storage unit 124. The request unit 123 requests the smart contract 104 to issue an NFT by executing an NFT issuance transaction using the user wallet private key. With this processing, information necessary for issuing the NFT is supplied to the smart contract 104 via the communication unit 121.

In step S311, the NFT issuance unit 182 of the smart contract 104 acquires the request. That is, the NFT issuance unit 182 acquires information necessary for issuing the NFT supplied from the user terminal device 101.

In step S312, the NFT issuance unit 182 issues an NFT token ID corresponding to the content information requested from the user terminal device 101 by using the acquired information.

When the processing of step S312 ends, the NFT issuance processing ends.

### <Flow of verification processing>

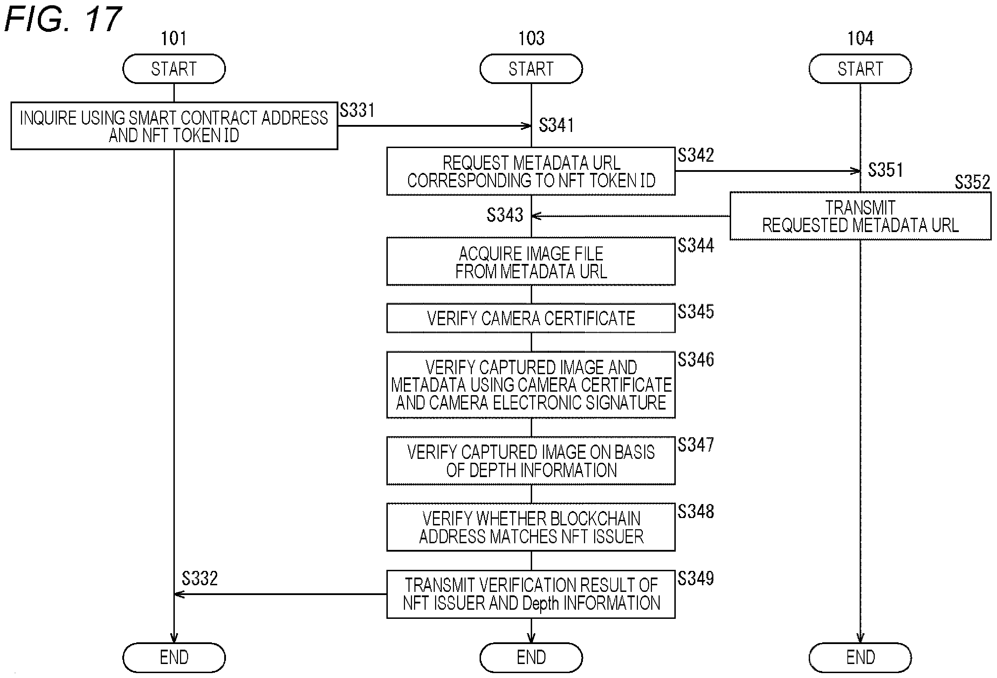

Next, an example of a flow of the verification processing in this case will be described with reference to the flowchart of Fig. 17. In this case, the verification processing is performed on the NFTed content information.

When the verification processing is started, the verification processing unit 311 of the user terminal device 101 makes an inquiry using the smart contract address and the NFT token ID in step S331 (That is, verification is requested.). In step S341, the verification unit 162 of the verification server 103 acquires the request via the communication unit 161.

In step S342, the verification unit 162 requests the metadata URL corresponding to the NFT token ID (the storage destination address of the content information specified by the NFT token ID) from the smart contract 104 specified by the smart contract address. In step S351, the NFT issuance unit 182 of the smart contract 104 acquires the request via the communication unit 181.

In step S352, the NFT issuance unit 182 specifies the requested metadata URL, and transmits the metadata URL as a response to the request to the verification server 103 as a request source via the communication unit 181. In step S343, the verification unit 162 of the verification server 103 acquires the response (that is, the metadata URL) via the communication unit 161.

In step S344, the verification unit 162 acquires an image file from the acquired metadata URL.

In step S345, the verification unit 162 verifies whether or not the camera certificate stored in the image file is valid by inquiring of a certificate authority in which information of the camera private key and the camera public key is registered. In a case where it is determined that the camera certificate is invalid, the processing proceeds to step S349.

In a case where it is determined that the camera certificate is valid, in step S346, the verification unit 162 verifies whether or not the captured image and the metadata stored in the image file have been tampered with, using the camera certificate and the camera electronic signature stored in the image file. In a case where it is determined that the captured image and the metadata have been tampered with, the processing proceeds to step S349.

In a case where it is determined that the captured image and the metadata have not been tampered with, the verification unit 162 verifies whether or not the captured image has been counterfeited using the depth information in step S347. In a case where it is determined that the captured image has been counterfeited, the processing proceeds to step S349.

In a case where it is determined that the captured image is properly generated, the verification unit 162 verifies whether or not the blockchain address stored in the image file matches the blockchain address of the NFT issuer included in the NFT token ID in step S348. The blockchain address of the image contributor (creator of the content information) is stored in the image file. That is, it is verified whether or not the blockchain address of the NFT issuer included in the NFT token ID matches the blockchain address of the user (image contributor) of the imaging device 102.

In step S349, the verification unit 162 transmits information indicating the verification result of the authenticity of the captured image or the like using the blockchain address of the NFT issuer and the depth information to the user terminal device 101 via the communication unit 161. In step S332, the verification processing unit 311 of the user terminal device 101 acquires the verification result via the communication unit 121. The verification processing unit 311 stores the verification result in the storage unit 124.

When the processing of step S332 ends, the verification processing ends.

By executing each processing as described above, it is possible to verify the image file after the NFT is issued. Therefore, for example, it is possible to verify (information stored in) the image file NFTed by the conventional system.

Note that either the processing in step S345 or the processing in step S346 may be executed first. Furthermore, either the processing in step S347 or the processing in step S348 may be executed first.

### <5. Third embodiment>

### <Verification by smart contract>

In the first embodiment and the second embodiment, the verification server 103 verifies the content information. However, the smart contract 104 may verify the content information.

### <Verification server>

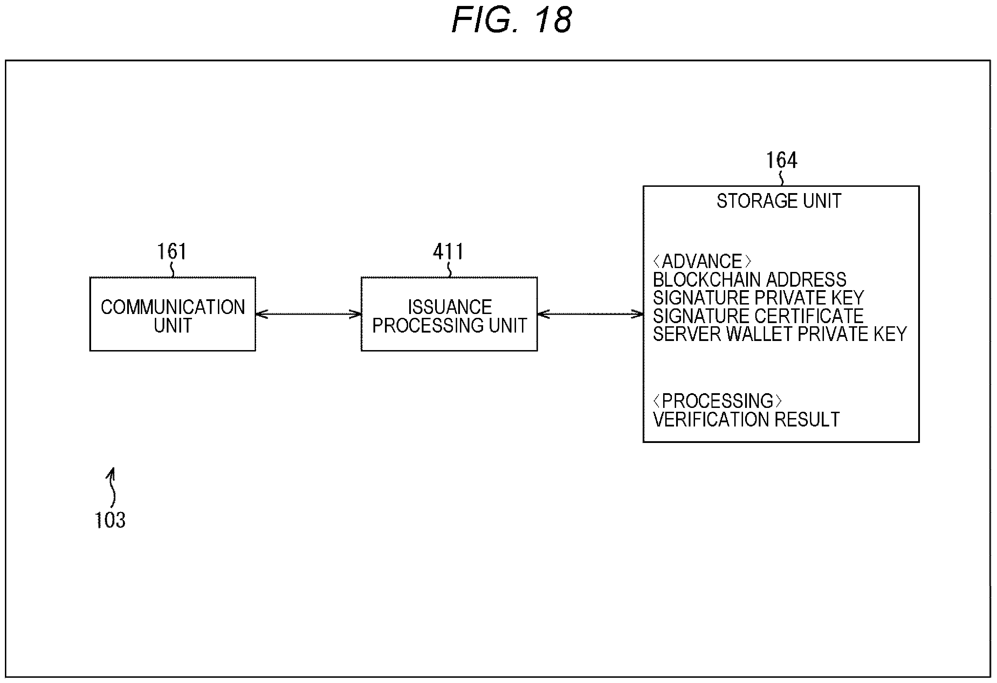

Fig. 18 is a block diagram illustrating a main configuration example of a verification server 103 in that case. As illustrated in Fig. 18, the verification server 103 in this case includes an issuance processing unit 411 instead of the verification unit 162 and the request unit 163 in Fig. 4.

The issuance processing unit 411 performs processing related to issuance of a camera certificate and issuance of an NFT. For example, the issuance processing unit 411 may request the smart contract 104 to issue the camera certificate via the communication unit 161. Furthermore, the issuance processing unit 411 may acquire the camera certificate transmitted from the smart contract 104 as a response to the request via the communication unit 161. Furthermore, the issuance processing unit 411 may transmit the acquired camera certificate to the imaging device 102 via the communication unit 161.

Furthermore, the issuance processing unit 411 may acquire the image file transmitted from the imaging device 102 via the communication unit 161. Furthermore, the issuance processing unit 411 may cause the user terminal device 101 to request NFT issuance for the image file. For example, the issuance processing unit 411 may generate an NFT issuance transaction for requesting issuance of an NFT for the image file. Furthermore, the issuance processing unit 411 may transmit the NFT issuance transaction to the user terminal device 101 via the communication unit 161. Of course, the issuance processing unit 411 may request the smart contract 104 to issue the NFT for the image file.

### <Smart contract>

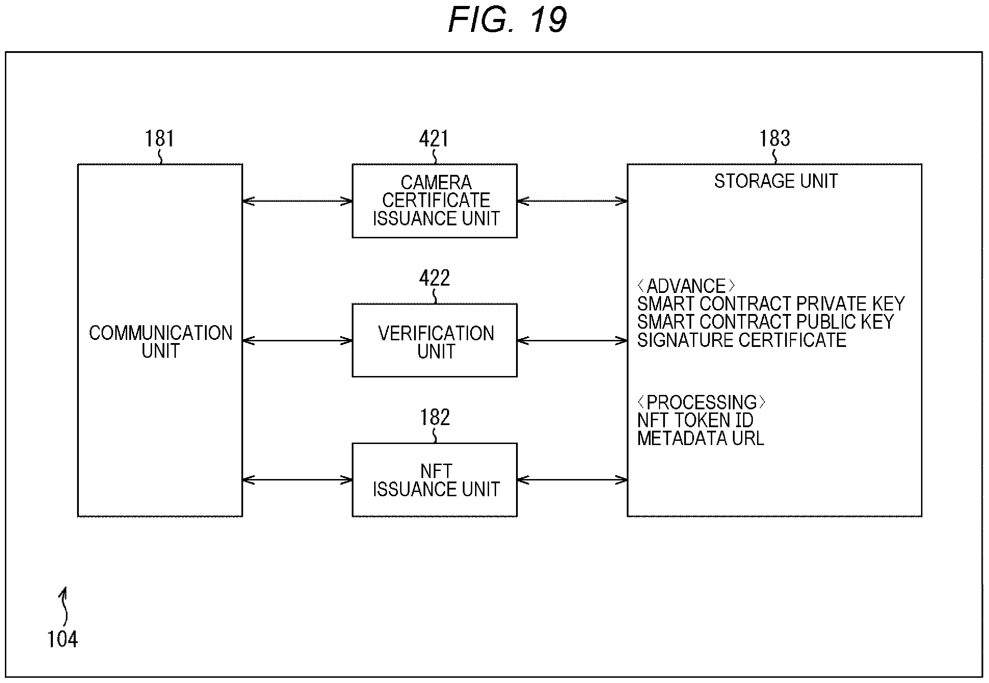

Fig. 19 is a block diagram illustrating a main configuration example of the smart contract 104 in this case. As illustrated in Fig. 19, the smart contract 104 in this case includes a camera certificate issuance unit 421 and a verification unit 422 in addition to the configuration of Fig. 5.

The camera certificate issuance unit 421 executes processing related to issuance of a camera certificate. For example, the camera certificate issuance unit 421 may acquire the camera certificate issuance request transmitted from the verification server 103 via the communication unit 181. Furthermore, the camera certificate issuance unit 421 may acquire a smart contract private key from the storage unit 183. The smart contract private key is a private key unique to the smart contract 104. Furthermore, the camera certificate issuance unit 421 may issue (generate) the requested camera certificate using the smart contract private key. That is, in this case, the camera certificate issuance unit 421 generates a camera certificate and encrypts the camera certificate with the smart contract private key. Furthermore, the camera certificate issuance unit 421 may transmit the camera certificate (encrypted camera certificate) to the verification server 103 of a request source via the communication unit 181.

The verification unit 422 performs processing related to verification of content information or the like for issuing the NFT. For example, the verification unit 422 may acquire a request for NFT issuance from the user terminal device 101 via the communication unit 181. In other words, the verification unit 422 may acquire information (image file or the like) necessary for issuing the NFT transmitted from the user terminal device 101 that has executed the NFT issuance transaction via the communication unit 181. Of course, the request for NFT issuance may be transmitted from the verification server 103.

Furthermore, the verification unit 422 may verify the image file requested to issue the NFT. For example, the verification unit 422 may acquire the smart contract public key from the storage unit 183. The smart contract public key is a public key corresponding to the smart contract private key. Furthermore, the verification unit 422 may verify whether the camera certificate stored in the image file is valid using the smart contract public key. For example, if the camera certificate is valid issued by the camera certificate issuance unit 421, the camera certificate is encrypted with the smart contract private key. Therefore, the verification unit 422 may decrypt the encrypted camera certificate using the smart contract public key, and determine that the camera certificate is valid in a case where the decryption is successful (in a case where a normal decryption result is obtained).

Furthermore, in a case where the camera certificate is determined to be valid, the verification unit 422 may verify whether or not the captured image and the metadata have been tampered with, using the camera certificate and the camera electronic signature stored in the image file. For example, the verification unit 422 may perform this verification by comparing the hashed image and metadata with the camera electronic signature decrypted with the camera public key.

Furthermore, in a case where it is determined that the captured image and the metadata have not been tampered with, the verification unit 422 may verify whether or not the captured image has been counterfeited by using the depth information stored in the image file. This verification method may be similar to the case of verification by the verification server 103 described with reference to Figs. 11 and 12.

Furthermore, in a case where it is determined that the captured image is valid, the verification unit 422 may verify whether or not the blockchain address stored in the image file matches the blockchain address of the user (that is, the user of the user terminal device 101) who has executed the transaction. Here, the blockchain address stored in the image file indicates the creator of the content information (the image contributor of the captured image). Furthermore, for the smart contract 104, the user of the user terminal device 101 is an issuer that requests issuance of the NFT. Therefore, the verification unit 422 can verify whether or not the image contributor has made a request for issuing the NFT corresponding to the image file by comparing the blockchain addresses as described above. Note that, in a case where the verification server 103 requests NFT issuance, the verification unit 422 is only required to verify whether or not the blockchain address of the verification server 103 of the request source is valid.

Furthermore, the verification unit 422 may supply information indicating a result of the verification as described above to the storage unit 164 and store the information.

In this case, the NFT issuance unit 182 may issue the NFT token ID for the image file (captured image) verified as described above.

In the smart contract 104 having such a configuration, for example, the verification unit 422 performs verification whether the captured image has been tampered with using the camera electronic signature, and in a case where it is determined that the captured image has not been tampered with as a result of the verification, the NFT issuance unit 182 issues the NFT corresponding to the captured image. By doing so, the smart contract 104 can prove that the captured image to be NFTed by itself is not tampered with. That is, the smart contract 104 can prove authenticity of content information to be NFTed.

Furthermore, the verification unit 422 verifies whether the metadata (for example, a blockchain address or the like) of the captured image has been tampered with, using the camera electronic signature. In this way, the smart contract 104 can prove that the metadata of the captured image to be NFTed by itself has not been tampered with. That is, the smart contract 104 can prove authenticity of metadata of content information to be NFTed.

Furthermore, the verification unit 422 verifies whether the captured image is valid using the depth information corresponding to the captured image. In this way, the smart contract 104 can verify whether or not the captured image to be NFTed by itself has been counterfeited. That is, the smart contract 104 can prove authenticity of content information to be NFTed.

Furthermore, the verification unit 422 verifies whether the requester (issuer) of the issuance of the NFT is valid. In this way, the smart contract 104 can verify whether or not the issuer of the NFT is valid. That is, the smart contract 104 can verify the authenticity of the issuer of the NFT. Note that this verification may be performed by the NFT issuance unit 182.

### <Flow of certificate issuance processing>

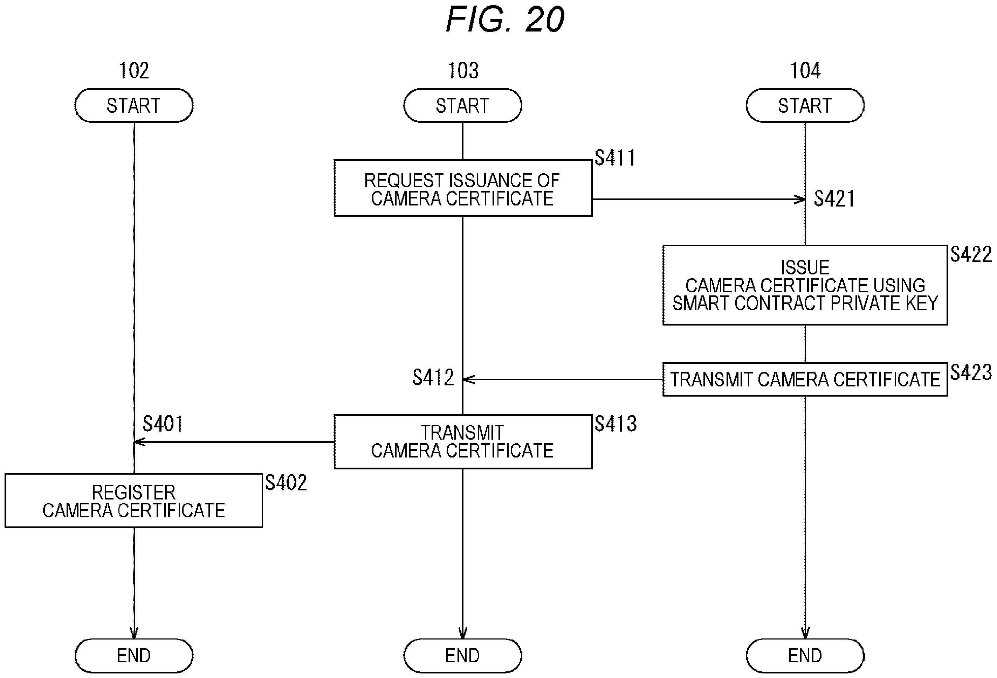

In this case, the smart contract 104 may issue the camera certificate as described above. An example of a flow of the certificate issuance processing executed at that time will be described with reference to a flowchart of Fig. 20.

When the certificate issuance processing is started, the issuance processing unit 411 of the verification server 103 requests the smart contract 104 to issue a camera certificate via the communication unit 161 in step S411. In step S421, the camera certificate issuance unit 421 of the smart contract 104 acquires the request via the communication unit 181.

In step S422, the camera certificate issuance unit 421 acquires the smart contract private key from the storage unit 183, and issues (generates) the requested camera certificate using the smart contract private key. For example, the camera certificate issuance unit 421 generates a camera certificate and encrypts the camera certificate with the smart contract private key.

In step S423, the camera certificate issuance unit 421 transmits the camera certificate (encrypted camera certificate) to the verification server 103 as the request source via the communication unit 181. In step S412, the issuance processing unit 411 of the verification server 103 acquires the camera certificate via the communication unit 161.

In step S413, the issuance processing unit 411 transmits the camera certificate to the imaging device 102 via the communication unit 161. In step S401, the registration unit 142 of the imaging device 102 acquires the camera certificate via the communication unit 141.

In step S402, the registration unit 142 supplies and stores the acquired camera certificate in the storage unit 146. The storage unit 146 stores (registers) the supplied camera certificate. When the processing of step S402 ends, the certificate issuance processing ends.

### <Flow of verification issuance processing>

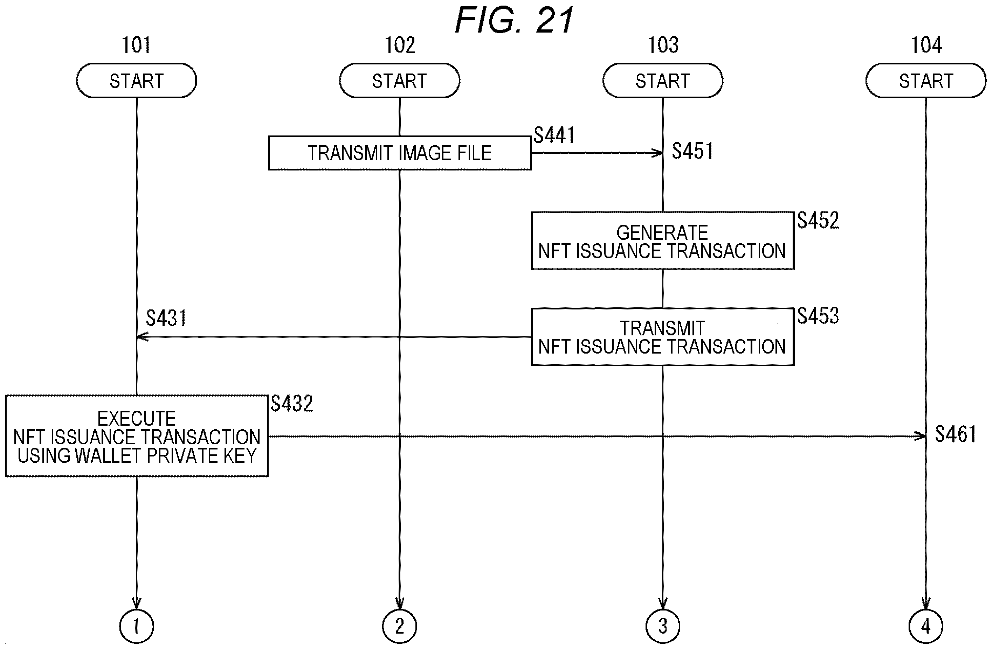

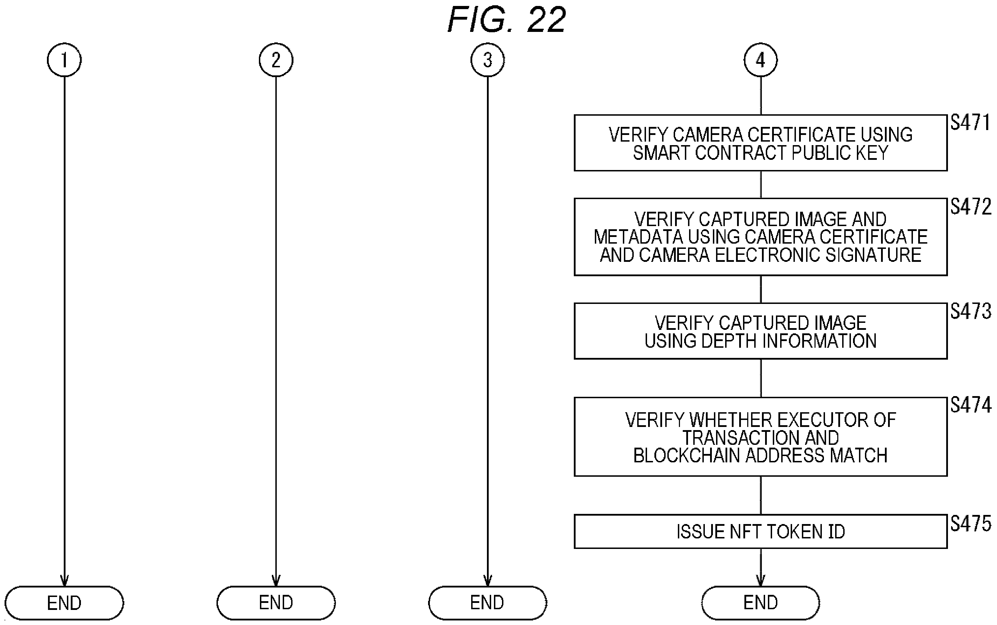

Next, a flow of verification issuance processing in which verification of the content information and the like and issuance of the NFT are performed will be described with reference to flowcharts of Figs. 21 and 22. This verification issuance processing corresponds to the processing of step S103 and step S104 in Fig. 6.

When the verification issuance processing is started, the upload unit 145 of the imaging device 102 transmits the image file generated by itself to the verification server 103 via the communication unit 141 in step S441 of Fig. 21. In step S451, the issuance processing unit 411 of the verification server 103 acquires the image file via the communication unit 161.

In step S452, the issuance processing unit 411 generates an NFT issuance transaction for requesting issuance of an NFT corresponding to the acquired image file. The NFT issuance transaction includes information necessary for issuing the NFT. For example, the NFT issuance transaction may include a metadata URL indicating a storage destination of the image file, a blockchain address of an issuer of the NFT (a user of the user terminal device 101), a cloud electronic signature, and the like.

In step S453, the issuance processing unit 411 transmits the generated NFT issuance transaction to the user terminal device 101 via the communication unit 161. In step S431, the request unit 123 of the user terminal device 101 acquires the NFT issuance transaction via the communication unit 121.

In step S432, the request unit 123 acquires the user wallet private key from the storage unit 124. The request unit 123 executes the NFT issuance transaction acquired in step S431 using the user wallet private key. With this processing, information necessary for issuing the NFT is supplied to the smart contract 104 via the communication unit 121. That is, issuance of the NFT is requested to the smart contract 104.

In step S461, the NFT issuance unit 182 of the smart contract 104 acquires the request. That is, the NFT issuance unit 182 acquires information (for example, a metadata URL, a blockchain address, a cloud electronic signature, or the like.) necessary for issuing the NFT from the user terminal device 101.

In step S471 of Fig. 22, the verification unit 422 verifies whether or not the camera certificate stored in the image file is valid, using the smart contract public key. The camera certificate stored in the image file is issued by the smart contract 104 as described above, and is encrypted with the smart contract private key. The verification unit 422 decrypts the encrypted camera certificate with the smart contract public key, and determines that the camera certificate is valid if the encrypted camera certificate can be correctly decrypted and the same certificate as the certificate issued by the smart contract 104 is obtained. In a case where the camera certificate cannot be correctly decrypted or the obtained camera certificate does not match the certificate issued by the smart contract 104, it is determined that the camera certificate is invalid. In that case, the verification issuance processing ends.

In a case where it is determined that the camera certificate is valid, in step S472, the verification unit 422 verifies whether or not the captured image and the metadata stored in the image file have been tampered with, using the camera certificate and the camera electronic signature stored in the image file. In a case where it is determined that the captured image and the metadata have been tampered with, the verification issuance processing ends.

In a case where it is determined that the captured image and the metadata have not been tampered with, the verification unit 422 verifies whether or not the captured image has been counterfeited using the depth information in step S473. In a case where it is determined that the captured image has been counterfeited, the verification issuance processing ends.

In a case where it is determined that the captured image is properly generated, the verification unit 422 verifies whether or not the executor of the NFT issuance transaction ((the user of) the user terminal device 101) corresponds to the blockchain address included in the NFT issuance transaction in step S474. The NFT issuance transaction includes the blockchain address of the image contributor (content information creator). Therefore, the verification unit 422 can verify whether or not the issuer is valid (whether or not the issuer is a valid image contributor (creator of the content information)) by performing this verification. Accordingly, the smart contract 104 can prove the authenticity of the issuer of the NFT.

In a case where it is determined that the blockchain address does not correspond to the transaction executor and the NFT issuer is not valid, the verification issuance processing ends. Furthermore, in a case where the blockchain address corresponds to the transaction executor and the NFT issuer is determined to be valid, the processing proceeds to step S475.

In step S475, the NFT issuance unit 182 issues the NFT token ID corresponding to the content information verified by the verification server 103, which is requested from the user terminal device 101, by using the acquired information.

When the processing of step S475 ends, the verification issuance processing ends.

By executing each processing as described above, the smart contract 104 can verify the authenticity of the captured image, the metadata, and the like, and issue the NFT. As a result, authenticity of content information to be NFTed can be proved.

### <6. Supplementary note>

### <Application example of content information and the like>

Although the case where the content information is a captured image (still image) and the content information file is an image file has been described above as an example, the content information processed by the information processing device to which the present technology is applied is arbitrary and is not limited to the above example. For example, the content information may be a moving image. Furthermore, the content information may be, for example, a character, audio, or the like other than an image. That is, the content information file is also arbitrary, and may be other than the image file. Furthermore, the content information may be a combination of a plurality of types of content information such as an image and audio. That is, the creator of the content information may be other than the image contributor. Furthermore, the content information generation device may be a device other than the imaging device.

### <Computer>

The above-described series of processing can be executed by hardware or software. In a case where a series of processing is executed by software, a program included in the software is installed on a computer. Here, the computer includes a computer incorporated in dedicated hardware, a general-purpose personal computer capable of executing various functions by installing various programs, and the like, for example.

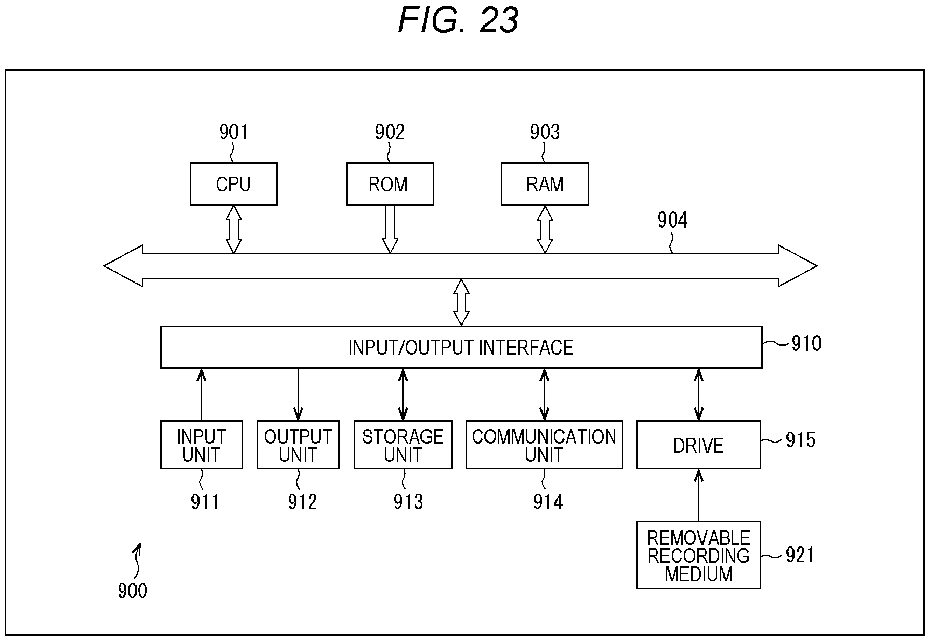

Fig. 23 is a block diagram illustrating a configuration example of hardware of a computer which executes a series of processes described above by a program.

In a computer 900 illustrated in Fig. 23, a central processing unit (CPU) 901, a read only memory (ROM) 902, and a random access memory (RAM) 903 are mutually connected via a bus 904.

Furthermore, an input/output interface 910 is also connected to the bus 904. An input unit 911, an output unit 912, a storage unit 913, a communication unit 914, and a drive 915 are connected to the input/output interface 910.

The input unit 911 includes, for example, a keyboard, a mouse, a microphone, a touch panel, an input terminal, and the like. The output unit 912 includes, for example, a display, a speaker, an output terminal, and the like. The storage unit 913 includes, for example, a hard disk, a RAM disk, a non-volatile memory and the like. The communication unit 914 includes, for example, a network interface. The drive 915 drives a removable recording medium 921 such as a magnetic disk, an optical disk, a magneto-optical disk, or a semiconductor memory.

In the computer configured as described above, for example, the CPU 901 loads a program stored in the storage unit 913 into the RAM 903 via the input/output interface 910 and the bus 904 and executes the program. As a result, the series of processes described above is performed. The R_AM 903 may appropriately store data and the like necessary for the CPU 901 to execute various processes.

The program executed by the computer may be recorded in the removable recording medium 921 as a package medium or the like and applied, for example. In that case, the program may be read from the removable recording medium 921 attached to the drive 915 and installed in the storage unit 913 via the input/output interface 910.

Furthermore, this program may be provided via any wired or wireless transmission medium such as a local area network, the Internet, digital satellite broadcasting, or the like. In this case, the program may be received by the communication unit 914 and installed in the storage unit 913 via the input/output interface 910.

In addition, the program may be installed in the ROM 902, the storage unit 913, or both in advance.

### <Applicable target of present technology>

The present technology may be applied to any configuration. For example, the present technology may be applied to various electronic devices.

Furthermore, for example, the present technology can also be implemented as a partial configuration of an device, such as a processor (for example, a video processor) as a system large scale integration (LSI) or the like, a module (for example, a video module) using a plurality of the processors or the like, a unit (for example, a video unit) using a plurality of the modules or the like, or a set (for example, a video set) obtained by further adding other functions to the unit.

Note that, in the present specification, a system means a set of a plurality of components (devices, modules (parts) and the like), and it does not matter whether or not all the components are in the same housing. Therefore, a plurality of devices stored in different housings and connected via a network and one device in which a plurality of modules is stored in one housing are both systems.

### <Field and application to which present technology is applicable>

The system, device, processing unit and the like to which the present technology is applied can be used in any field such as traffic, medical care, crime prevention, agriculture, livestock industry, mining, beauty care, factory, household appliance, weather, and natural surveillance, for example. Furthermore, application thereof is also arbitrary.

### <Others>

An embodiment of the present technology is not limited to the embodiment described above, and various modifications can be made without departing from the scope of the present technology.

For example, a configuration described as one device (or processing unit) may be divided and configured as a plurality of devices (or processing units). Conversely, configurations described above as a plurality of devices (or processing units) may be collectively configured as one device (or processing unit). Furthermore, it goes without saying that a configuration other than the above-described configurations may be added to the configuration of each device (or each processing unit). Moreover, when the configuration and operation as the entire system are substantially the same, a part of the configuration of a certain device (or processing unit) may be included in the configuration of another device (or another processing unit).

Furthermore, for example, the above-described programs may be executed in an arbitrary device. In this case, the device is only required to have a necessary function (functional block and the like) and obtain necessary information.

Furthermore, for example, each step in one flowchart may be executed by one device, or may be executed by being shared by a plurality of devices. Moreover, in a case where a plurality of pieces of processing is included in one step, the plurality of pieces of processing may be executed by one device, or may be shared and executed by a plurality of devices. In other words, a plurality of pieces of processing included in one step can be executed as a plurality of steps. Conversely, the processes described as the plurality of the steps can also be collectively executed as one Step.

Furthermore, for example, in a program executed by the computer, processing of steps describing the program may be executed in a time-series order in the order described in the present specification, or may be executed in parallel or individually at a required timing such as when a call is made. That is, as long as there is no contradiction, the processing of each step may be executed in an order different from the above-described order. Moreover, the processes in the steps describing the program may be executed in parallel with processes of another program, or may be executed in combination with processes of the other program.

Furthermore, for example, a plurality of technologies related to the present technology can be implemented independently as a single entity as long as there is no contradiction. It goes without saying that any plurality of present technologies can be implemented in combination. For example, a part or all of the present technologies described in any of the embodiments can be implemented in combination with a part or all of the present technologies described in other embodiments. Furthermore, a part or all of any of the above-described present technologies can be implemented together with another technology that is not described above.

Note that the present technology can also have the following configurations.
(1) An information processing device including:
   a verification unit that performs verification whether content information has been tampered with using an electronic signature; and
   a request unit that requests issuance of a non-fungible token (NFT) corresponding to the content information in a case where it is determined as a result of the verification that the content information has not been tampered with.
(2) The information processing device according to (1), in which
   the verification unit performs verification whether metadata of the content information has been tampered with using the electronic signature.
(3) The information processing device according to (1) or (2), in which
   the verification unit performs verification whether the content information is valid using depth information corresponding to the content information.
(4) The information processing device according to (1), in which
   the request unit generates an NFT issuance transaction that requests issuance of the NFT.
(5) The information processing device according to (4), in which
   the request unit executes the NFT issuance transaction.
(6) The information processing device according to (4), in which
   the request unit supplies the NFT issuance transaction to a device that requests issuance of the NFT.
(7) An information processing method including:
   performing verification whether content information has been tampered with using an electronic signature; and
   requesting issuance of a non-fungible token (NFT) corresponding to the content information in a case where it is determined as a result of the verification that the content information has not been tampered with.
(8) An information processing device including:
   a verification unit that performs verification whether content information has been tampered with using an electronic signature; and
   an issuance unit that issues a non-fungible token (NFT) corresponding to the content information in a case where it is determined as a result of the verification that the content information has not been tampered with.
(9) The information processing device according to (8), in which
   the verification unit performs verification whether metadata of the content information has been tampered with using the electronic signature.
(10) The information processing device according to (8) or (9), in which
   the verification unit performs verification whether the content information is valid using depth information corresponding to the content information.
(11) The information processing device according to (8) or (9), in which
   the verification unit verifies whether a requester of issuance of the NFT is valid.
(12) An information processing method including:
   performing verification whether content information has been tampered with using an electronic signature; and
   issuing a non-fungible token (NFT) corresponding to the content information in a case where it is determined as a result of the verification that the content information has not been tampered with.
(13) An information processing device including: a content information generation unit that generates content information according to an operation of a user; and a content information file generation unit that generates a content information file that stores the content information and a blockchain address corresponding to the user.
(14) The information processing device according to claim (13), in which
   the content information file generation unit stores the content information and an electronic signature corresponding to the blockchain address in the content information file.
(15) The information processing device according to (13) or (14), in which
   the content information file generation unit stores a certificate including a public key corresponding to a private key unique to the information processing device in the content information file.
(16) The information processing device according to (13) or (14), further including
   a depth information generation unit that generates depth information corresponding to the content information,
   in which the content information file generation unit stores the depth information in the content information file.
(17) The information processing device according to (13) or (14), further including
   a request unit that requests verification of the content information and issuance of a non-fungible token (NFT) corresponding to the content information by transmitting the content information file to another device.
(18) The information processing device according to (13) or (14), in which
   the content information generation unit captures an image of a subject according to an operation of the user, and generates the captured image as the content information, and
   the content information file generation unit generates, as the content information file, an image file that stores the captured image and the blockchain address.
(19) An information processing method including:
   generating content information according to an operation of a user; and
   generating a content information file that stores the content information and a blockchain address corresponding to the user.
(20) An information processing system including a content information generation device, a verification device, and a non-fungible token (NFT) issuance device,
   in which the content information generation device includes:
   a content information generation unit that generates content information according to an operation of a user;
   a content information file generation unit that generates a content information file that stores the content information and a blockchain address corresponding to the user; and
   a verification request unit that requests verification of the content information by supplying the content information file to the verification device,
   the verification device includes:
      a verification unit that performs verification whether the content information has been tampered with using an electronic signature; and
      an issuance request unit that requests the NFT issuance device to issue an NFT corresponding to the content information in a case where it is determined as a result of the verification that the content information has not been tampered with, and
      the NFT issuance device includes
      an issuance unit that issues the requested NFT corresponding to the content information.

### REFERENCE SIGNS LIST

- 100: Image processing system
- 101: User terminal device
- 102: Imaging device
- 103: Verification server
- 104: Smart contract
- 110: Network
- 121: Communication unit
- 122: Registration processing unit
- 123: Request unit
- 124: Storage unit
- 141: Communication unit
- 142: Registration unit
- 143: Imaging control unit
- 144: Image file generation unit
- 145: Upload unit
- 146: Storage unit
- 147: Imaging unit
- 148: Depth information generation unit
- 161: Communication unit
- 162: Verification unit
- 163: Request unit
- 164: Storage unit
- 181: Communication unit
- 182: NFT issuance unit
- 183: Storage unit
- 230: Image file
- 231: Image data
- 232: Blockchain address
- 233: Depth information
- 234: Camera electronic signature
- 235: Camera certificate
- 311: Verification unit
- 411: Issuance processing unit
- 421: Camera certificate issuance unit
- 422: Verification unit
- 900: Computer

## Claims

1. An information processing device comprising:
a verification unit that performs verification whether content information has been tampered with using an electronic signature; and
a request unit that requests issuance of a non-fungible token (NFT) corresponding to the content information in a case where it is determined as a result of the verification that the content information has not been tampered with.

2. The information processing device according to claim 1, wherein
the verification unit performs verification whether metadata of the content information has been tampered with using the electronic signature.

3. The information processing device according to claim 1, wherein
the verification unit performs verification whether the content information is valid using depth information corresponding to the content information.

4. The information processing device according to claim 1, wherein
the request unit generates an NFT issuance transaction that requests issuance of the NFT.

5. The information processing device according to claim 4, wherein
the request unit executes the NFT issuance transaction.

6. The information processing device according to claim 4, wherein
the request unit supplies the NFT issuance transaction to a device that requests issuance of the NFT.

7. An information processing method comprising:
performing verification whether content information has been tampered with using an electronic signature; and
requesting issuance of a non-fungible token (NFT) corresponding to the content information in a case where it is determined as a result of the verification that the content information has not been tampered with.

8. An information processing device comprising:
a verification unit that performs verification whether content information has been tampered with using an electronic signature; and
an issuance unit that issues a non-fungible token (NFT) corresponding to the content information in a case where it is determined as a result of the verification that the content information has not been tampered with.

9. The information processing device according to claim 8, wherein
the verification unit performs verification whether metadata of the content information has been tampered with using the electronic signature.

10. The information processing device according to claim 8, wherein
the verification unit performs verification whether the content information is valid using depth information corresponding to the content information.

11. The information processing device according to claim 8, wherein
the verification unit verifies whether a requester of issuance of the NFT is valid.

12. An information processing method comprising:
performing verification whether content information has been tampered with using an electronic signature; and
issuing a non-fungible token (NFT) corresponding to the content information in a case where it is determined as a result of the verification that the content information has not been tampered with.

13. An information processing device comprising:
a content information generation unit that generates content information according to an operation of a user; and
a content information file generation unit that generates a content information file that stores the content information and a blockchain address corresponding to the user.

14. The information processing device according to claim 13, wherein
the content information file generation unit stores the content information and an electronic signature corresponding to the blockchain address in the content information file.

15. The information processing device according to claim 13, wherein
the content information file generation unit stores a certificate including a public key corresponding to a private key unique to the information processing device in the content information file.

16. The information processing device according to claim 13, further comprising
a depth information generation unit that generates depth information corresponding to the content information, wherein the content information file generation unit stores the depth information in the content information file.

17. The information processing device according to claim 13, further comprising
a request unit that requests verification of the content information and issuance of a non-fungible token (NFT) corresponding to the content information by transmitting the content information file to another device.

18. The information processing device according to claim 13, wherein
the content information generation unit captures an image of a subject according to an operation of the user, and generates the captured image as the content information, and
the content information file generation unit generates, as the content information file, an image file that stores the captured image and the blockchain address.

19. An information processing method comprising:
generating content information according to an operation of a user; and
generating a content information file that stores the content information and a blockchain address corresponding to the user.

20. An information processing system comprising a content information generation device, a verification device, and a non-fungible token (NFT) issuance device,
wherein the content information generation device includes:
a content information generation unit that generates content information according to an operation of a user;
a content information file generation unit that generates a content information file that stores the content information and a blockchain address corresponding to the user; and
a verification request unit that requests verification of the content information by supplying the content information file to the verification device,
the verification device includes:
a verification unit that performs verification whether the content information has been tampered with using an electronic signature; and
an issuance request unit that requests the NFT issuance device to issue an NFT corresponding to the content information in a case where it is determined as a result of the verification that the content information has not been tampered with, and
the NFT issuance device includes
an issuance unit that issues the requested NFT corresponding to the content information.
